# EUROPÄISCHE PATENTSCHRIFT

(11) **EP 2 720 882 B1**
(45) Veröffentlichungstag und Bekanntmachung des Hinweises auf die Patenterteilung: **20.05.2015**
(21) Anmeldenummer: 12725407.6
(22) Anmeldetag: 01.06.2012
(51) Int. Cl.: B60B 33/02, B60B 33/00

(54) **LAUFROLLE**
ROLLER
ENSEMBLE ROUE À PIVOT

(30) Priorität: 15.06.2011 DE 102011051068; 12.08.2011 DE 102011052693; 16.11.2011 DE 102011055418
(43) Veröffentlichungstag der Anmeldung: 23.04.2014
(73) Patentinhaber: Tente GmbH & Co. KG, 42929 Wermelskirchen (DE)
(72) Erfinder: HOFRICHTER, Günther, 42553 Velbert (DE); PLAUTZ, Karl-Heinz, 58097 Hagen (DE); HEIN, Georg, 58515 Lüdenscheid (DE)
(74) Vertreter: Müller, Enno
(86) Internationale Anmeldenummer: PCT/EP2012/060388
(87) Internationale Veröffentlichungsnummer: WO 2012/171814

(56) Entgegenhaltungen:
- WO-A1-94/01292
- DE-A1- 4 321 739
- DE-A1- 10 047 006
- DE-A1-102004 035 220
- DE-A1-102007 039 208
- US-A1- 2007 056 141

## Beschreibung

Die Erfindung betrifft eine Laufrolle mit vorzugsweise zwei Rädern und einer Feststellvorrichtung, wobei die Feststellvorrichtung von einem Beaufschlagungsteil zum Lösen oder Festsetzen beaufschlagt ist und das Beaufschlagungsteil durch einen Antrieb bewegbar ist, wobei eine durch den Antrieb bewirkte Linearbewegung eines Übertragungsteils über Federkraft zur Bewegung des Beaufschlagungsteils auf dieses übertragen wird, und wobei die Feder an dem Übertragungsteil abgestützt ist.

Bei einer bekannten Laufrolle, vgl. DE 10 2007 039 208 A1, sind die auf das Beaufschlagungsteil einwirkenden Federn einerseits zwischen dem Übertragungsteil und dem Beaufschlagungsteil und andererseits zwischen dem Beaufschlagungsteil und einem Gehäuse der Laufrolle abgestützt. Darüber hinaus ist es auch bekannt, beide Federn an dem Übertragungsteil abzustützen.

Der bekannte Aufbau ist aber in vertikaler Erstreckung relativ groß bauend.

Zum Stand der Technik ist des Weiteren auf die DE 43 22 739 A1, die US 2007/056141 A1, die DE 10 2004 035 220 A1, die WO 94/01292 A1 und die DE 100 47 006 A1 zu verweisen.

Ausgehend von dem zunächst angeführten Stand der Technik beschäftigt sich die Erfindung mit der Aufgabenstellung, eine Laufrolle der angegebenen Art anzugeben, die einen günstigen konstruktiven Aufbau ermöglicht.

Zur Lösung der Aufgabe ist bei einer derartigen Laufrolle ein für die Feder an dem Beaufschlagungsteil ausgebildeter Abstützbereich von dem Übertragungsteil durchfahrbar vorgesehen. Hierdurch ist die Möglichkeit einer gewissen Ineinanderschachtelung von Beaufschlagungsteil und Übertragungsteil erreicht.

Hierzu kann das Beaufschlagungsteil eine zumindest nach vertikal oben offene Öffnung aufweisen, die ein entsprechendes Eintauchen und eine entsprechende Relativbewegung des Übertragungsteils relativ zu dem Beaufschlagungsteil ermöglicht. Dadurch, dass das Übertragungsteil vertikal durchsetzend zu einem Bereich der Abstützung einer oder, wie weiter bevorzugt, im Fall von zwei Federn beider Federn an dem Beaufschlagungsteil vorgesehen ist, ist in einfacher Weise auch unterhalb des Abstützungsbereiches der Feder bzw. der Federn an dem Beaufschlagungsteil eine Zusammenwirkung zwischen zumindest einer der Federn und dem Übertragungsteil ermöglicht.

Das Übertragungsteil bewegt sich hierbei bevorzugt in Komprimierungs- bzw. Dekomprimierungsrichtung einer Feder. Bezüglich des üblichen Aufbaus und der üblichen Anordnung einer Laufrolle bewegt sich das Übertragungsteil hierbei vertikal. Weiter bevorzugt bewegt es sich nur vertikal, also nicht etwa auch im Sinne einer - überlagerten - Drehbewegung.

Der Antrieb kann ein elektromotorischer Antrieb sein und ein einer Rotorwelle eines Standardelektromotors vergleichbares Bauteil als (nur) linearverschiebliches Teil ausgebildet sein.

Es handelt sich hierbei um einen Elektromotor, dessen Rotorwelle als Hohlteil, mit einem Innengewinde, ausgebildet ist, das mit einem zentralen, ein Außengewinde aufweisenden Teil zusammenwirkt, das aufgrund dessen bei einer Drehung des Rotors linear bewegbar ist. Man bezeichnet einen derartigen Elektromotor auch als Linearaktuator. Es wird zu Linearaktuatoren auch beispielsweise auf die EP 1555 446 B1 und die DE 20 2009 015 840 U1 verwiesen. Im vorliegenden Zusammenhang ist ein Linearaktuator bevorzugt, bei welchem das linear bewegte Teil (Spindel) zentral und eine dieses antreibende Mutter (Rotor mit Gewinde) umgebend - innerhalb des Antriebs - angeordnet ist.

Das Übertragungsteil ist - vertikal - relativ bewegbar zu dem Abstützteil der Feder an dem Beaufschlagungsteil. Hierdurch ist auch die Möglichkeit einer gewissen Ineinanderschachtelung von Beaufschlagungsteil und Übertragungsteil erreicht.

Das Beaufschlagungsteil kann in Einzelheit eine zumindest nach vertikal oben offene Öffnung aufweisen, die ein entsprechendes Eintauchen und eine entsprechende Relativbewegung des Übertragungsteils relativ zu dem Beaufschlagungsteil ermöglicht. Dadurch, dass das Übertragungsteil vertikal durchsetzend zu einem Bereich der Abstützung einer oder, wie weiter bevorzugt, im Fall von zwei Federn beider Federn an dem Beaufschlagungsteil vorgesehen ist, ist in einfacher Weise auch unterhalb des Abstützungsbereiches der Feder bzw. der Federn an dem Beaufschlagungsteil eine Zusammenwirkung zwischen zumindest einer der Federn und dem Übertragungsteil ermöglicht. Das Übertragungsteil durchfährt den Bereich der Abstützung bevorzugt mit einer nur linearen Bewegung, also ohne Drehung.

In der Stellung der Totalfeststellung und/oder der Richtungsfeststellung ist bevorzugt noch ein Federraum, d.h. eine Einfederbarkeit, gegeben, so dass das Beaufschlagungsteil bei entsprechender Handhabung federnd ausweichen kann. Dies ist insbesondere im Hinblick auf die bereits beschriebene Not-Entriegelung von Vorteil. Diese Ausgestaltung ist auch günstig im Falle von einer Formschlussfestsetzung wie bspw. einer Verzahnungsfestsetzung. Eine im Zeitpunkt der Festsetzungs-Auslösung nicht sogleich mögliche Einrastung kann höhenmäßig ausgeglichen werden. Eine entsprechende Möglichkeit, die Stellung zumindest kurzzeitig oder zunächst oder um ein gewisses Ausmaß zu überfahren, hat aber auch Bedeutung im Hinblick auf den Antrieb. In einer oder beiden genannten Verriegelungsstellungen fährt der Motor nicht "auf Block", ist also bspw. keine unmittelbare Anlage von Federwindungen gegeben, die in dieser Stellung die Wirkung eines Massivteils ergeben würde. Vielmehr ist durch den Motor auch ein gewisses Überfahren dieser Stellung möglich, welches sich lediglich in einer Erhöhung der Federkraft ggf. auswirken würde.

Im Falle von zwei Federn, die zwischen dem Übertragungsteil und dem Beaufschlagungsteil wirken, ist bevorzugt, dass die Federn übereinander angeordnet sind. Weiter bevorzugt in Vertikalrichtung aneinander anschließend, d.h. ohne dass sie einen vertikalen Überdeckungsbereich, in dem sich beide Federn ggf. erstrecken, ausbilden.

Auch ist es bevorzugt, dass die untere Feder mit ihrem oberen Ende und die obere Feder mit ihrem unteren Ende an dem Beaufschlagungsteil abgestützt sind. Das Beaufschlagungsteil kann hierzu etwa einen nach radial innen vorstehenden Flansch aufweisen, der beidseitig zur Abstützung einer dieser Federn dient.

Weiter ist auch bevorzugt, dass unabhängig von dem Betriebszustand, der im Allgemeinen eine vollständige Freigabe oder eine Tötalfeststellung und weiter bevorzugt auch nur eine Richtungsfeststellung sein kann, die Feder oder im Falle von zwei Federn eine der beiden Federn innerhalb des Beaufschlagungsteils angeordnet ist. Weiter bevorzugt sind beide Federn unabhängig von einer der genannten Stellungen jeweils innerhalb des Beaufschlagungsteils angeordnet.

Weiter ist auch bevorzugt, dass im Falle einer Feder die eine Feder, ansonsten jedenfalls mindestens eine, weiter bevorzugt beide Federn, außerhalb des Übertragungsteils angeordnet sind.

Besonders bevorzugt ist, dass das Übertragungsteil und das Beaufschlagungsteil als geometrisch einfache Körper, beispielsweise als Stange oder Rohr, ausgebildet sind. Hierbei bedarf es nur im Hinblick auf die Ausbildung der Abstützungsbereiche für die Federn einer Abweichung von der genannten geometrisch einfachen Gestaltung.

Insbesondere ist bevorzugt, dass das Übertragungsteil als Zylinderteil ausgebildet ist, bei dem die eine oder beide Federn außen bzgl. der Zylinderaußenfläche angeordnet sind. Bevorzugt handelt es sich um Wendelfedern, welche koaxial zu der Zylinderaußenfläche das Übertragungsteil umgebend angeordnet sind.

In weiterer Einzelheit kann das Übertragungsteil als Hohlteil, andererseits aber auch im Wesentlichen als Massivteil ausgebildet sein. In Bereich seines oberen Endes kann ein Innengewinde vorgesehen sein. Mit Hilfe des Innengewindes kann das Übertragungsteil mit dem Linearteil des Linearaktuators gekoppelt sein.

Das Linearteil des Linearaktuators kann entsprechend auch ein Massivteil sein. Dieses kann an seinem dem Übertragungsteil zugewandten Ende ein Außengewinde aufweisen, das in das Innengewinde des Übertragungsteils zur Verbindung dieser Teile einschraubbar ist.

Der Elektromotor ist vorzugsweise ein Schrittmotor, weiter vorzugsweise ein Hybridschrittmotor oder ein Permanentmagnetschrittmotor. Speziell handelt es sich auch um einen Klauenpol-Schrittmotor.

Das Beaufschlagungsteil kann rohrartig ausgebildet sein. Hierbei ist abweichend von der Rohrform der genannte, nach innen ragende Flansch vorgesehen, an dem sich eine oder die genannten Federn, ggf. vermittels einer Unterlegscheibe, abstützen.

Bevorzugt weist die Laufrolle auch eine Notentriegelung auf, etwa, um im Falle eines Ausfalls des Motors, der das Übertragungsteil betätigt, insbesondere also eines Elektromotors, noch von Hand eine eingenommene Verriegelungsstellung, sei es eine Richtungsfeststellung oder eine Totalfeststellung, zu lösen.

Hierzu kann das Beaufschlagungsteil jedenfalls in einer der Totalfeststellung entsprechenden oder jedenfalls in einer der Richtungsfeststellung entsprechenden Stellung an dem Übertragungsteil abgestützte Feder relativ zu dem feststehenden Übertragungsteil zum Aufheben der Totalfeststellung oder der Richtungsfeststellung mittels einer unabhängig von dem Antrieb, bevorzugt von Hand bewegbaren, Betätigungshandhabe in eine Entriegelungsstellung bewegbar sein.

Im Weiteren ist hierzu bevorzugt vorgesehen, dass eine geometrische Drehachse der Betätigungs-Handhabe bzgl. des in einem Vertikalschnitt versetzt zu einer Drehachse des Rades angeordneten Beaufschlagungsteil auf derselben Seite bzgl. der Drehachse des Rades angeordnet ist. Die Betätigungs-Handhabe und das Beaufschlagungsteil sind konstruktiv nahe beieinander ausgeführt. So ist eine günstige Krafteinwirkung möglich. Insbesondere ist auch eine günstige Unterbringung im Gehäuse möglich. Wenn, wie bevorzugt, das Beaufschlagungsteil im Bereich eines Montagezapfens, ggf. in dessen vertikaler Verlängerung, angeordnet ist, kann die Betätigungs-Handhabe auch in dem diesbezüglichen Bereich des Gehäuses untergebracht sein.

Es ist bevorzugt, dass die geometrische Drehachse der Betätigungs-Handhabe das Beaufschlagungsteil durchsetzend verläuft und/oder in einer ein Rad durchsetzenden Horizontalebene verläuft. Die das Beaufschlagungsteil durchsetzende Drehachse, wobei hier bevorzugt auf den gesamten Bewegungsbereich des Beaufschlagungsteils, einschließlich beider Endstellungen bei Richtungsfeststellung oder Totalfeststellung, abgestellt ist, bedeutet die unmittelbare Nebeneinanderanordnung von Betätigungs-Handhabe und Beaufschlagungsteil. So ist ein möglichst kurzer Weg zwischen der von außen zugänglichen Betätigungs-Handhabe und dem Teil, auf das einzuwirken ist, das Beaufschlagungsteil, erreicht. Dadurch, dass alternativ oder ergänzend die Drehachse auch in der ein Rad durchsetzenden Horizontalebene verläuft, ist zugleich verdeutlicht, dass die Anordnung relativ weit unten bzgl. der Laufrolle vorgesehen ist.

Weiter ist bevorzugt, dass eine die Radachse durchsetzende Horizontalebene auch die Betätigungs-Handhabe durchsetzt. Dies beschreibt die Anordnung der Betätigungs-Handhabe in einer vertikalen Höhe, die dem Zentrumsbereich eines Rades der Laufrolle entspricht.

Eine weitere bevorzugte Ausgestaltung sieht vor, dass die Betätigungs-Handhabe bei einer Bewegung des Beaufschlagungsteils vertikal feststehend ist. Wie weiter unten noch in weiterer Einzelheit beschrieben, kann zunächst grundsätzlich vorgesehen sein, dass sich zusammen mit einer Bewegung des Beaufschlagungsteils, auch unabhängig von einem Eingriff von Hand über die Betätigungs-Handhabe, die Betätigungs-Handhabe zusammen mit dem Beaufschlagungsteil vertikal bewegt. Bevorzugt ist jedoch, dass die BetätigungsHandhabe feststehend ist, von außen also nicht bei einer (motorischen) Betätigung der Laufrolle zugleich auch eine Bewegung der Betätigungs-Handhabe sichtbar gegeben ist. Es ist gleichsam eine Entkopplung zwischen der Bewegung des Beaufschlagungsteils und der Betätigungs-Handhabe, über eine nachstehend noch weiter im Einzelnen beschriebene Entkopplungs-Mechanik, gegeben. So ist etwa auch einer unfreiwilligen Blockierung der (motorischen) Bewegung des Beaufschlagungsteils durch eine äußerliche Festsetzung etwa an einem Gebäudeabsatz oder einem im Bereich der Rolle stehenden Gegenstand der Betätigungs-Handhabe vorgebeugt.

In weiterer Einzelheit ist auch bevorzugt, dass ein mit dem Beaufschlagungsteil zusammenwirkender Ausleger mit einem in Bewegungsrichtung des Beaufschlagungsteils im Gehäuse geführten Schiebeteil zusammenwirkt. Diese Gestaltung ist zugleich auch wesentlich für die genannte Entkopplung. Dadurch, dass der Ausleger das Schiebeteil bewegt, kann das Schiebeteil nach außen abgeschirmt im Inneren der Laufrolle bzw. im Inneren des Gehäuses der Laufrolle angeordnet sein. Weiter bevorzugt ist in diesem Zusammenhang, dass das Schiebeteil in einem von der Betätigungs-Handhabe durchgriffenen feststehenden Gehäuseeinsatzteil geführt ist. Das Gehäuseeinsatzteil ist damit Teil des Laufrad-Gehäuses. Das Schiebeteil kann auch unmittelbar in einem Gehäuseschalenteil geführt sein. Konstruktiv günstiger ist es aber, ein solches Gehäuseeinsatzteil - zusätzlich - in dem Gehäuse vorzusehen.

Die Betätigungs-Handhabe kann einen Durchgreifzapfen aufweisen, der unmittelbar auf das Schiebeteil einwirkt. Da die Betätigungs-Handhabe drehend zu betätigen ist, kann ein solcher bevorzugt exzentrisch angeordneter oder bspw. einen Exzenter aufweisender Durchgreifzapfen bei einer Drehung der Betätigungs-Handhabe, bevorzugt eben ohne eine gleichzeitige Vertikalbewegung, auf das Schiebeteil einwirken.

Auch ist bevorzugt, dass das Schiebeteil einen unteren und einen oberen Anschlag aufweist, der zur Entriegelung in der Total- oder Richtungsfeststellung von dem Durchgreifzapfen beaufschlagbar ist. Befindet sich das Beaufschlagungsteil in einer der genannten Stellungen, ist bevorzugt die Betätigungs-Handhabe mit dem Durchgreifzapfen so angeordnet, dass eine Berührung mit dem entsprechenden Anschlag des Schiebeteils vorliegt oder nach einer kurzen Bewegung erreichbar ist. Sodann ist eine mechanische Kopplung zwischen der Betätigungs-Handhabe und dem Schiebeteil gegeben, so dass eine weitere Bewegung dann unmittelbar auf den Ausleger und damit das Beaufschlagungsteil einwirkt.

Die Betätigungs-Handhabe kann hinsichtlich ihrer Drehbewegung in eine Neutralstellung federvorgespannt sein. Diese Neutralstellung entspricht bevorzugt der vorstehend angesprochenen Nahezu-Eingriffstellung. Wenn das Beaufschlagungsteil sich in der Stellung entsprechend der Totalfeststellung oder der Richtungsfeststellung befindet, ist zufolge der Neutralstellung der Durchgreifzapfen in Anlage oder nahezu in Anlage zu dem entsprechenden Anschlag des Schiebeteils.

Die Betätigungs-Handhabe kann zunächst so ausgebildet sein, dass sie, etwa zufolge einer außenseitig ausgeformten Rippe oder eines Vorsprungs unmittelbar von Hand betätigbar ist. Bevorzugt ist jedoch, dass sie so ausgebildet ist, dass sie - bevorzugt: nur - mit einem Einfachwerkzeug wie einer Münze, einem Zweidorn oder dergleichen zu betätigen ist. So kann einerseits eine im Notfall immer mögliche Handhabung erreicht werden, andererseits aber auch nicht gewünschten Betätigungen außerhalb eines Notfalls vorgebeugt werden. Auch ist bevorzugt, dass eine von Hand eingestellte Notfall-Entriegelungsstellung verrastet ist. Die Verrastung kann etwa dadurch erreicht sein, dass im Zuge der Zusammenwirkung des Durchgreifzapfens mit einem der genannten Anschläge dieser in eine Rastausnehmung an einem der Anschläge einfährt. Es sind aber ersichtlich auch alternative Ausgestaltungen für eine Verrastung möglich. So kann ein Drehteil der Betätigungs-Handhabe selbst mit einem Rastnocken, der etwa in eine Umfangsausnehmung einfährt, zusammenwirken. Die Verrastung sorgt für eine ungehinderte Bewegbarkeit der so not-entriegelten Rolle. Es muss nicht von Hand die Entriegelungsstellung aufrechterhalten werden.

Auch ist bevorzugt, dass durch eine motorische Bewegung des Beaufschlagungsteils, nach erfolgter Not-Entriegelung über die Betätigungs-Handhabe, die Neutralstellung der Betätigungs-Handhabe wieder herstellbar ist. Dies ist bevorzugt und besonders günstig erreichbar im Zusammenhang mit der schon beschriebenen Federvorspannung der Betätigungs-Handhabe in eine Neutralstellung. Wenn die Raststellung aufgehoben wird, verfährt die Betätigungs-Handhabe zufolge der Federvorspannung dann in die genannte Neutralstellung zurück. Es ist aber auch alternativ möglich, dass die Betätigungs-Handhabe nach Lösen der Verrastungsstellung etwa aufgrund Schwerkraft in eine Stellung verfährt, in der keine Verrastung mehr gegeben ist.

Insbesondere ist auch bevorzugt, dass zur Wiederherstellung der Neutralstellung das Beaufschlagungsteil motorisch zunächst weiter in Richtung der durch die Betätigungs-Handhabe aufgezwungenen Bewegung zu bewegen ist. Wenn eine Entriegelung der Richtungsfeststellung zufolge Betätigung der Betätigungs-Handhabe erreicht ist, erfolgt zufolge einer weiteren Bewegung des Beaufschlagungsteils in die entsprechende Richtung, die dann der Totalfeststellung entspricht, ein Lösen der Verrastungsstellung, speziell ein Lösen des Durchgreifzapfens aus einer Rastausnehmung in einem der genannten Anschläge, wodurch die Betätigungs-Handhabe freigegeben wird und sie wieder eine andere Stellung, die nicht mehr zur Verrastung führt, oder eben die Neutralstellung, einnehmen kann. Umgekehrt ist bei einer Not-Entriegelung aus der Totalfeststellung eine - weitere, dann aber nur elektromotorisch herbeiführbare - Bewegung des Beaufschlagungsteils in Richtung der Richtungsfeststellung erforderlich, um denselben Effekt zu erreichen. Weiter bevorzugt ist in diesem Zusammenhang, dass im Falle, dass das Beaufschlagungsteil durch einen Motor, insbesondere elektromotorisch, bewegt wird, dieser Motor bei einer Betätigung immer zunächst einen gewissen Zyklus durchfährt, um im Falle, dass zuvor eine Not-Entriegelung vorgenommen wurde, diese sicher zu lösen und sich sodann in dem üblichen Betriebszyklus zu befinden.

Hinsichtlich der Notentriegelung mittels einer Handhabe, die dann unabhängig vom Drehantrieb betätigbar ist, kann auch vorgesehen sein, dass das Beaufschlagungsteil mit einem weiter bevorzugt außen bzgl. des Beaufschlagungsteils angebrachten Bewegungsfortsatz ausgebildet ist, der unmittelbar, insbesondere von Hand, zur Bewegung des Beaufschlagungsteils bewegbar ist. Es ist auch möglich, dass bei Bewegung des Beaufschlagungsteils, bspw. durch den genannten Drehantrieb, die Handhabe für die Notentriegelung, ggf. auch in sichtbarer Weise, gleichfalls eine Bewegung, bevorzugt in vertikaler Richtung, mit vollzieht. Wenn jedoch eine Notentriegelung vorzunehmen ist, kann mittels der Handhabe von Hand die erforderliche Bewegung des Beaufschlagungsteils durchgeführt werden.

Die Handhabe kann in weiterer Einzelheit auch als Drehhebel ausgebildet sein. Der Drehhebel kann vermittels Zusammenwirkung mit einer gehäusefesten Abstützung eine Verstellkraft nach senkrecht oben oder senkrecht unten auf das Beaufschlagungsteil. übermitteln. Hierbei kann zwischen dem Beaufschlagungsteil und dem Drehhebel ein als Bewegungsfortsatz dienender, fest mit dem Beaufschlagungsteil verbundener Ausleger vorgesehen sein. Der Drehhebel sitzt bevorzugt außen auf dem Gehäuse auf. Bei Betätigung des Übertragungsteils beziehungsweise des Beaufschlagungsteils ist zu erkennen, dass der Drehhebel sich nach vertikal oben beziehungsweise unten bewegt, hierbei jedoch keine Drehbewegung vollzieht, sondern nur die genannte Vertikalbewegung.

Weiter ist bevorzugt, dass die Feder mittels des Übertragungsteils von dem Abstützbereich an dem Beaufschlagungsteil abhebbar ist. An dem Übertragungsteil ist bevorzugt eine entsprechende Mitnahme ausgebildet, welche die Mitnahme bei entsprechender Bewegung des Übertragungsteils relativ zu dem Beaufschlagungsteil von diesem abhebt.

Weiter bevorzugt bildet das Beaufschlagungsteil einen unteren, nach unten offenen zentralen Raum aus, in dem eine der Federn oder die Feder aufgenommen ist. Das Beaufschlagungsteil ist insofern vergleichsweise glockenartig ausgebildet. Der nach unten offene zentrale Raum ist bevorzugt auch ein zylindrischer Raum.

Im Hinblick auf das genannte Abheben der Feder von dem Abstützbereich ist bevorzugt eine Abhebung nach oben möglich, nach unten jedoch weiter bevorzugt eine Festsetzung über einen entsprechenden Anschlag, bspw. durch eine nach innen vorragende Stufe an dem Beaufschlagungsteil. Die Feder kann über eine insofern definierte Stelle vertikal nach unten nicht weiter relativ zu dem Beaufschlagungsteil bewegt werden.

Weiter ist bevorzugt an dem Übertragungsteil ein oberer Stützbereich für die Feder ausgebildet. Die Feder ist bevorzugt bezüglich dieses Stützbereiches auch nach unten abhebbar vorgesehen. Entsprechend ist vergleichbar zu der genannten Abstützung an dem genannten Beaufschlagungsteil die Feder relativ zu dem Übertragungsteil nach oben, über den Stützbereich hinaus, nicht bewegbar. Hinsichtlich der Handhabe, mit der ggf. die Notentriegelung durchführbar ist, ist auch bevorzugt, dass diese zusammen mit dem Beaufschlagungsteil verfährt. Bei einer üblichen Einnahme von verschiedenen Betriebszuständen, Richtungsfeststellung und/oder Neutralstellung und/oder Totalfeststellung, kann von außen bei einem Wechsel zwischen diesen Betriebsstellungen ein entsprechendes Verfahren der Handhabe in Vertikalrichtung erkannt werden.

Im Übrigen ist die Handhabe bevorzugt mit dem Beaufschlagungsteil fest verbunden. Mit der Ausnahme, das sie relativ zu dem Beaufschlagungsteil drehbar ist. Weiter ist bzw. sind, bevorzugt außenseitig, an dem Gehäuse, zugeordnet zu der Handhabe, ein oder zwei Widerlager ausgebildet. Die Handhabe ist relativ zu einem feststehenden Widerlager bewegbar. Durch ein bspw. Verdrehen der Handhabe kann es zu einem Abstützen an einem Widerlager kommen und somit die Abstützbewegung auf das Beaufschlagungsteil zu dessen Bewegung aus der Totalfeststellung oder der Richtungsfeststellung in die Neutralstellung genutzt sein.

Eine solche Bewegung des Beaufschlagungsteils durch die Handhabe erfolgt weiter bevorzugt relativ zu dem feststehenden Übertragungsteil unter Mitnahme des Abstützbereiches oder des Stützbereiches der Feder. Hinsichtlich des Stützbereiches kann auch ein oberer Stützbereich an dem Beaufschlagungsteil gegeben sein, über welchen die Feder bei einer entsprechenden Bewegung des Beaufschlagungsteil mitgenommen wird. Dies betrifft insbesondere die Bewegung des Beaufschlagungsteils aus der Richtungsfeststellung in die Neutralstellung.

Soweit zwei Federn vorgesehen sind, ist bevorzugt, dass eine Feder zur Bewegung des Beaufschlagungsteils in eine der Totalfeststellung entsprechende Stellung erforderlich ist und eine Feder zur Bewegung des Beaufschlagungsteils in eine der Richtungsfeststellung entsprechende Stellung erforderlich ist. Die Funktionen der Federn können so getrennt sein.

Im Falle von zwei Federn, die auch vertikal übereinander bevorzugt angeordnet sind, kann die untere Feder mit ihrem Ende und die obere Feder mit ihrem unteren Ende an dem Beaufschlagungsteil abgestützt sein.

Auch kann vorgesehen sein, dass die eine Feder und/ oder die erste und/oder die zweite Feder innerhalb des Beaufschlagungsteils angeordnet ist. Bevorzugt ist die Mehrzahl der Federn jeweils vollständig innerhalb des Beaufschlagungsteils angeordnet, jedenfalls in einer Stellung, die der Neutralstellung entspricht. Bevorzugt aber auch in einer Stellung, die der Richtungsfeststellung entspricht und/ oder einer Stellung, die der Totalfeststellung entspricht. Dies kann erreicht sein durch eine insgesamt röhrenförmige Ausbildung des Beaufschlagungsteils, in dem eine Feder oder ggf. zwei Federn, insbesondere vertikal übereinander, angeordnet sind. Dies kann auch nur im unteren Teil des Beaufschlagungsteils, etwa durch die genannte etwa glockenförmige Erweiterung, erreicht sein. Weiter ist auch bevorzugt, dass eine Feder oder, wenn zwei Federn vorgesehen sind, mindestens eine der zwei Federn oder beide Federn außerhalb des Übertragungsteils angeordnet sind. Hierdurch kann das Übertragungsteil sehr einfach, auch in diesem Bereich jedenfalls als Massivteil, ausgebildet sein.

Weiter ist bevorzugt, dass das Übertragungsteil innerhalb des Beaufschlagungsteils angeordnet ist. Es kann auch innerhalb des Beaufschlagungsteils hierdurch günstig geführt sein. Die Führung des Übertragungsteils innerhalb des Beaufschlagungsteils kann auch etwa vermittels eines Stützteils und/oder Abstützteils erreicht sein.

Hinsichtlich der Handhabe ist bevorzugt, dass diese drehbar relativ zu der Mitnahme bzw. dem Bewegungsfortsatz vorgesehen ist.

Hinsichtlich der jeweiligen Endlagen des Linearteils und/oder des Übertragungsteils und/oder des Beaufschlagungsteils ist bevorzugt, dass diese durch Sensoren, weiter bevorzugt durch außerhalb des Elektromotors angeordnete Sensoren, überwacht werden. Die jeweiligen Endlagen können in einer Steuerung des Elektromotors berücksichtigt werden. Sollte eine Endlage nicht oder nach einer gewissen Zeitspanne nicht erreicht sein, kann auch bspw. eine Warnmeldung ausgegeben werden.

Nachstehend ist die Erfindung weiter anhand der beigefügten Zeichnung erläutert, welche Ausführungsbeispiele der Erfindung darstellt. Ein Teil, das nur bezogen auf eines der Ausführungsbeispiele erläutert ist und bei einem weiteren Ausführungsbeispiel auf Grund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine perspektivische Ansicht einer als Doppelrolle ausgeführten Laufrolle;
- Fig. 2: eine Ansicht von hinten der Laufrolle gemäß Figur 1;
- Fig. 3: einen Querschnitt durch die Rolle gemäß Figur 1 beziehungsweise Figur 2, geschnitten entlang der Linie III - III in Figur 2;
- Fig. 4: eine Darstellung gemäß Figur 2, im Zustand der Richtungsfeststellung;
- Fig. 5: einen Querschnitt durch den Gegenstand gemäß Figur 4, geschnitten entlang der Linie V - V;
- Fig. 6: eine Darstellung gemäß Figur 2, im Zustand der Totalfeststellung;
- Fig. 7: einen Querschnitt durch den Gegenstand gemäß Figur 6, geschnitten entlang der Linie VII - VII in Figur 6;
- Fig. 8: eine Darstellung der Rolle gemäß Figur 1, bzw. Figuren 2, 4 oder 6, nach erfolgter Notentriegelung;
- Fig. 9: einen Querschnitt durch den Gegenstand gemäß Figur 8, geschnitten entlang der Ebene IX - IX, nach einer Notentriegelung aus der Stellung gemäß Fig. 5;
- Fig. 9a: eine Darstellung gemäß Fig. 9, nach einer Notentriegelung aus der Stellung der Fig. 7;
- Fig. 10: eine perspektivische Querschnittsansicht der Rolle gemäß Figuren 1 bis 3;
- Fig. 11: eine Explosionsdarstellung des Beaufschlagungsteils im Bereich der Notentriegelung;
- Fig. 12: eine perspektivische Ansicht von schräg unten der hinsichtlich Richtungsfeststellung und Totalfeststellung zusammenwirkenden Teile;
- Fig. 13: eine der Figur 1 entsprechende perspektivische Darstellung einer weiteren Ausführungsform;
- Fig. 14: die Rolle gemäß Figur 13 in der Rückansicht, in der Neutralstellung;
- Fig. 15: einen Querschnitt durch die Rolle gemäß Figur 13 bzw. Figur 14, geschnitten in der Ebene XV - XV in Figur 14;
- Fig. 16: eine Darstellung der Rolle gemäß Figur 14 in einer Stellung entsprechend der Richtungsfeststellung;
- Fig. 17: einen Querschnitt durch die Rolle gemäß Figur 16, geschnitten in der Ebene XVII - XVII in Figur 16;
- Fig. 18: eine Herausvergrößerung des Bereiches XVIII in Figur 17;
- Fig. 19: eine perspektivische Einzeldarstellung im Hinblick auf die Richtungsfestellung zusammenwirkenden Teile;
- Fig. 20: eine Darstellung der Rolle gemäß Figur 14, in einer Stellung entsprechend der Totalfeststellung;
- Fig. 21: einen Querschnitt durch die Rolle gemäß Figur 20, geschnitten in der Ebene XXI - XXI in Figur 20;
- Fig. 22: eine Darstellung der Rolle gemäß Figur 14 nach erfolgter Notentriegelung;
- Fig. 23: einen Querschnitt durch die Rolle gemäß Figur 22, geschnitten in der Ebene XXIII - XXIII, nach einer Notentriegelung aus der Stellung der Fig. 17;
- Fig. 23a: einen Querschnitt entsprechend Fig. 23, nach erfolgter Notentriegelung aus der Stellung der Fig. 21;
- Fig. 24: eine perspektivische aufgeschnittene Darstellung der Ausführungsform der Figuren 13 bzw. 14 in der Stellung gemäß Figur 14;
- Fig. 25: eine perspektivische Darstellung einer Rolle weiterer Ausführungsform;
- Fig. 26: eine Rückansicht der Rolle gemäß Fig. 25;
- Fig. 27: eine Rückansicht gemäß Fig. 26, in einer Stellung entsprechend einer Notentriegelung, aus der Richtungsfeststellung oder der Totalfeststellung;
- Fig. 28: eine Querschnittsdarstellung der Rolle gemäß den Figuren 25 bis 27, in der Neutralstellung;
- Fig. 29: eine Darstellung gemäß Fig. 28 in der Richtungsfeststellung;
- Fig. 30: eine Darstellung gemäß Fig. 28 in der Totalfeststellung;
- Fig. 31: eine Explosionsdarstellung der zur Notentriegelung zusammenwirkenden Teile;
- Fig. 32: eine Ausschnittsvergrößerung entsprechend dem Detail XXXII in Fig. 29, jedoch nach erfolgter Notentriegelung;
- Fig. 33: eine Darstellung gemäß dem Detail XXXIII in Fig. 30, jedoch nach erfolgter Notentriegelung; und
- Fig. 34: eine Darstellung gemäß Fig. 24 der Ausführungsform gemäß Fig. 28.

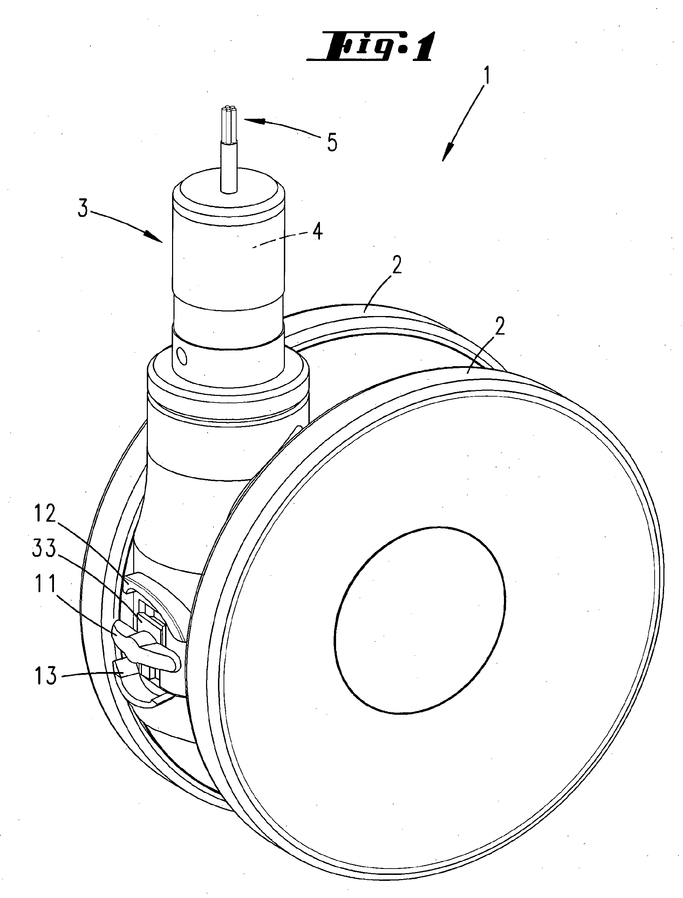

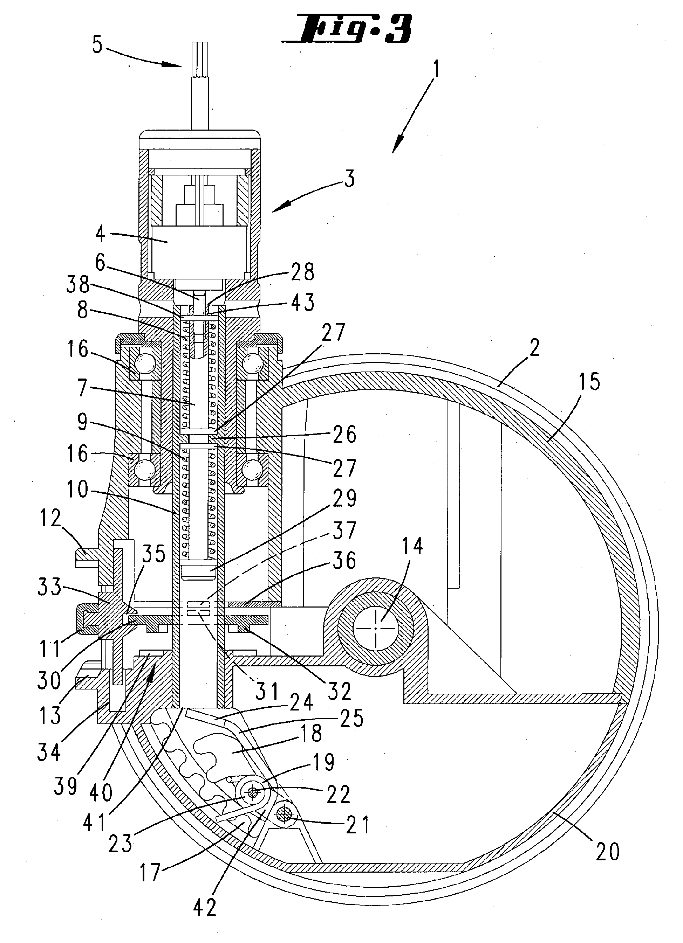

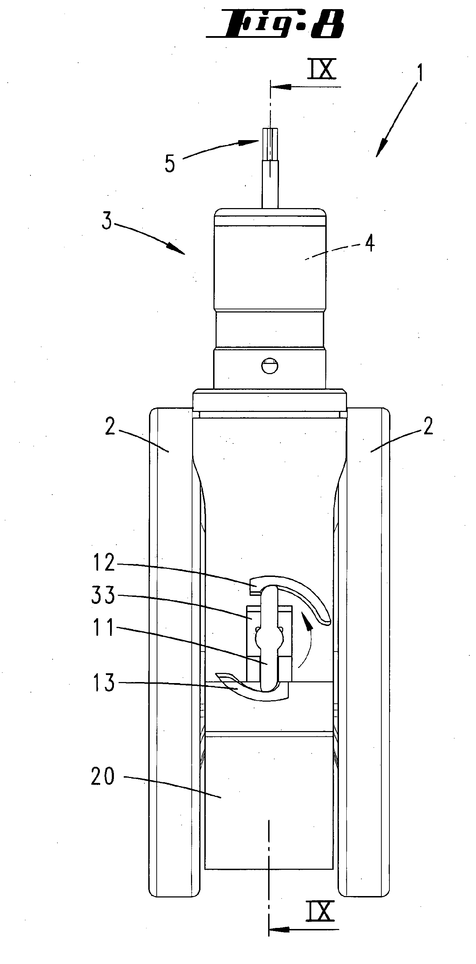

Mit dem Bezug insbesondere zunächst zu den Figuren 1 bis 12 ist eine als Doppelrolle ausgebildete Laufrolle 1 beschrieben. Die Laufrolle 1 weist zwei Räder 2 auf und einen Montagezapfen 3. In dem Montagezapfen 3 ist, wie weiter unten noch erläutert, ein Elektromotor 4 angeordnet, dessen Stromanschluss 5 oben, vorzugsweise zentral, aus dem Montagezapfen 3 herausgeführt ist. Der Elektromotor 4 bewirkt einen Linearantrieb eines Linearteils 6 (vgl. Figur 3), das auf ein Übertragungsteil 7 zur Vertikalverstellung einwirkt.

Das Übertragungsteil 7 wirkt über Druckfedern 8, 9 mit einem Beaufschlagungsteil 10 zusammen.

Wie weiter in Figur 1 zu erkennen, ist an dem Gehäuse der Rolle, gegebenenfalls einem Montagezapfen 3 beziehungsweise in Verlängerung desselben oder in dessen unterem Bereich beim Ausführungsbeispiel, eine Handhabe 11 angebracht, zur Notentriegelung der Laufrolle 1. Oberhalb und unterhalb der Handhabe 11, die konkret als Drehhebel ausgebildet ist, sind Widerlager 12,13 am Gehäuse ausgebildet.

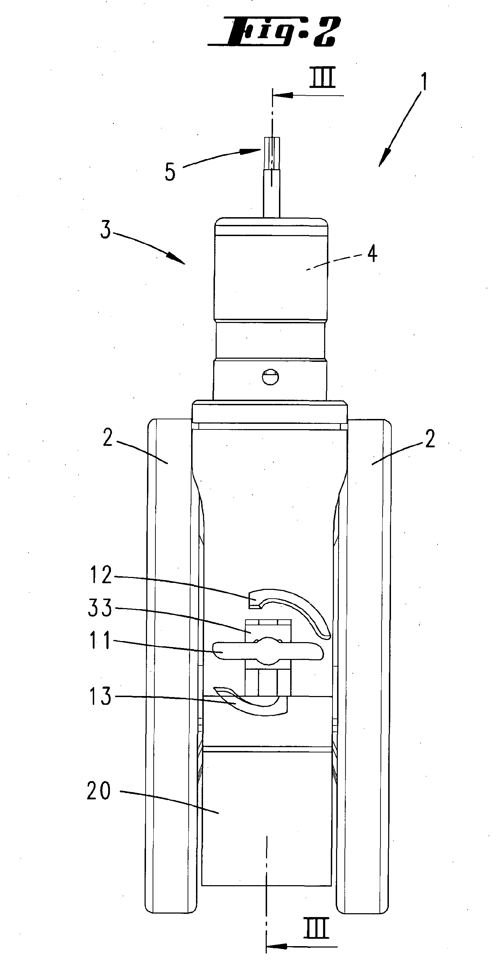

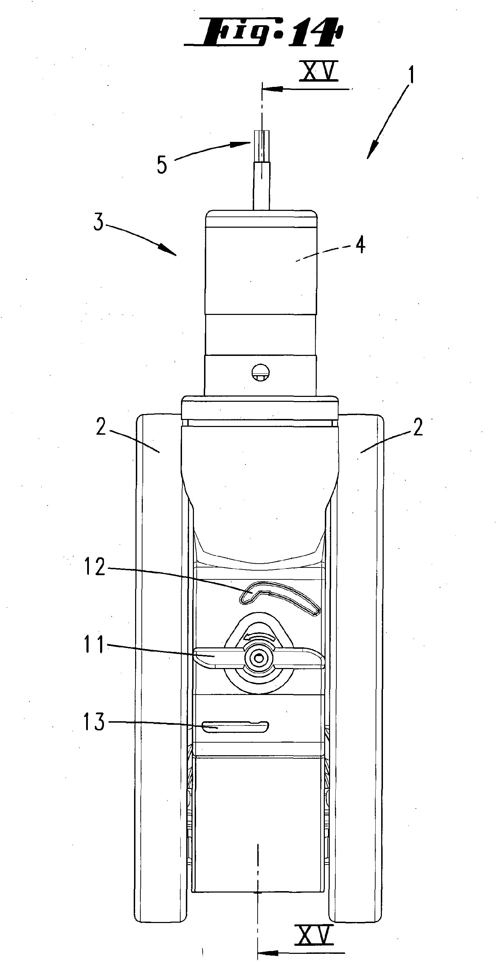

In Figur 2 wie auch in Figur 14 ist eine Rückansicht der Laufrolle gemäß Figur 1 wiedergegeben, in einer neutralen Position. In dieser Stellung ist weder eine Richtungsfeststellung noch eine Totalfeststellung gegeben. Die Laufrolle kann sich frei drehen und die Räder können frei rollen.

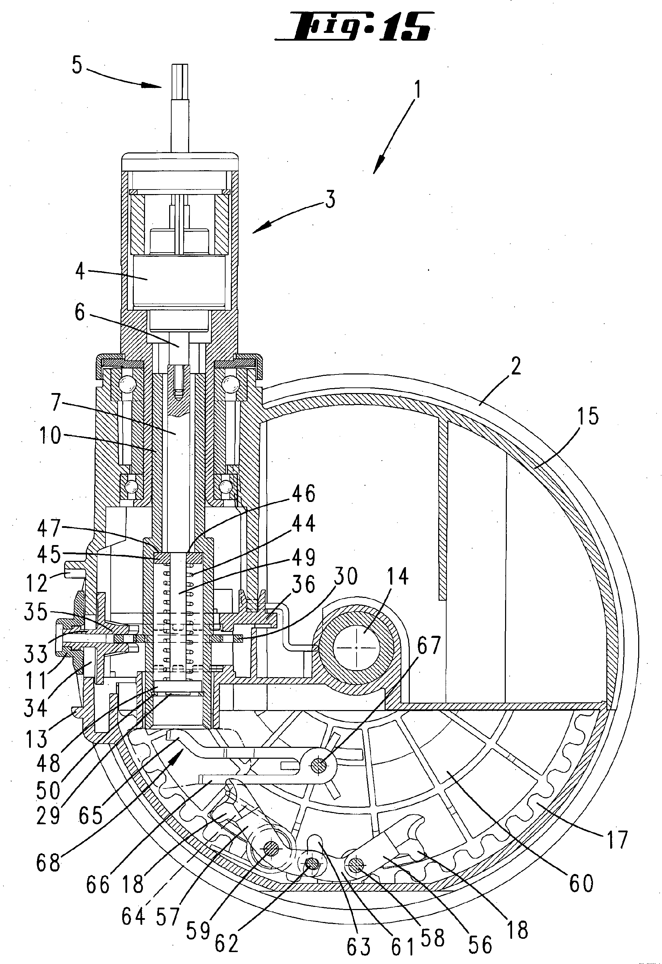

Mit weiterem Bezug zu Figur 3 aber auch bspw. Figur 15 ist zu erkennen, dass die Räder 2 auf einer Achse 14 angeordnet sind. In der Schnittdarstellung ist ein mittleres Gehäuseteil 15 zu erkennen, das zwischen den Rädern 2 ausgebildet ist.

Das Gehäuseteil 15 ist mittels Wälzlagern 16 drehbar relativ zu dem im montierten Zustand feststehenden Montagezapfen 3 angeordnet. Die Räder 2 weisen weiter eine zur Drehfeststellung vorgesehene Innenverzahnung 17 auf. Die Innenverzahnung 17 bildet in Zusammenwirkung mit einem, bspw. je Rad einem, ggf. aber auch je Rad zwei, vgl. zweite Ausführungsform, Eingriffsteil 18 - beim Ausführungsbeispiel - einen ersten Teil der Feststellvorrichtung. Das Eingriffsteil 18 ist durch eine Schenkelfeder 19 in die Freigabestellung gemäß Figur 3 vorgespannt. Die Schenkelfeder 19 stützt sich einerseits an dem Eingriffsteil 18 und andererseits an einem Innenbereich des Gehäuseteils 15 ab, nämlich dessen beim Ausführungsbeispiel als Teil des Gehäuseteils 15 ausgebildeten Unterteil 20.

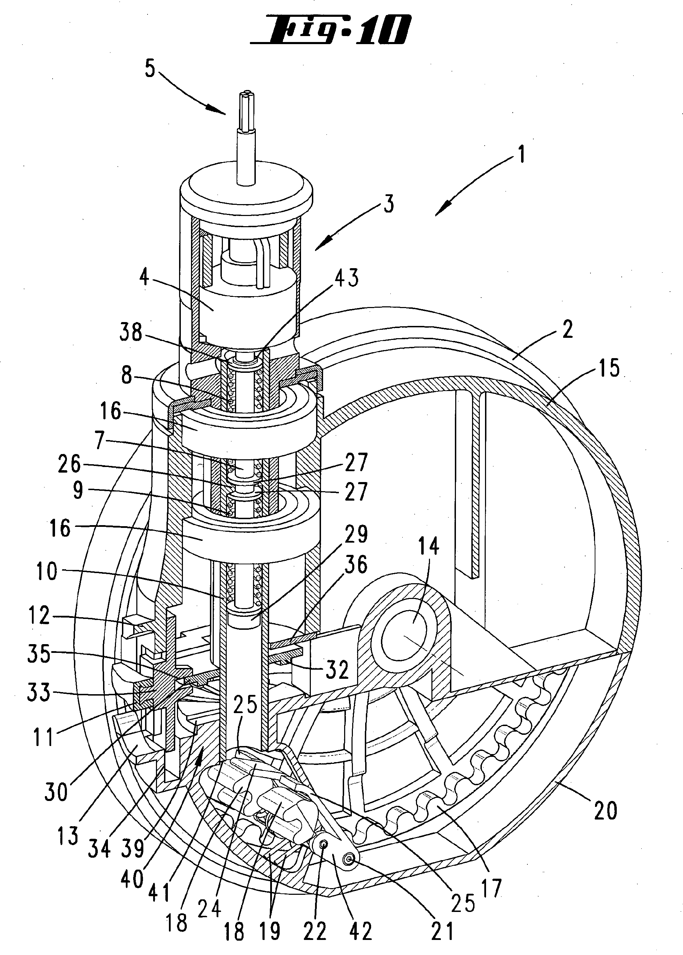

Das Eingriffsteil 18 ist weiter über eine Achse 21 drehbar in dem Gehäuse 15 beziehungsweise Unterteil 20 gehaltert. Die Achse 21 ist in einem Schwenkteil 42 ausgebildet, das zwei Lageraufnahmen 23, für die Achse 21 und eine weitere Achse 22, aufweist. Die Achse 22 lagert das Eingriffsteil 18 an dem Schenkelteil 42. Fest verbunden mit dem die Lageraufnahme 23 und die Achse 21 aufnehmenden Teil ist ein Einwirkabschnitt 24. Wie sich etwa aus der Darstellung gemäß Figur 10 ergibt, ist der Einwirkabschnitt 24 in Richtung der Achse 14 mittig zwischen zwei Seiten-Einwirkabschnitten 25. Die Seiten-Einwirkabschnitte 25 wirken jeweils unmittelbar auf eine der beiden, jedem Rad 2 zugeordneten, Eingriffsteile 18.

Mit Ausnahme des Unterschiedes von zwei zu einer Feder sind bei beiden Ausführungsformen insbesondere die bereits beschriebenen Ausbildungen übereinstimmend gegeben.

Das Beaufschlagungsteil 10 ist, jedenfalls im Wesentlichen, rohrförmig ausgebildet. Das Beaufschlagungsteil 10 weist weiter innenseitig einen als Abstützbereich dienenden Stützflansch 26 auf, an dem bei der ersten Ausführungsform sowohl die Druckfeder 8 wie die Druckfeder 9 abgestützt ist. Die Abstützung erfolgt beim Ausführungsbeispiel vermittels einer Unterlegscheibe 27.

Die bei der ersten Ausführungsform vorgesehenen zwei Federn 8, 9 sind übereinander angeordnet.

Die untere Feder 9 ist mit ihrem oberen Ende und die obere Feder 8 mit ihrem unteren Ende an dem Beaufschlagungsteil 10 vermittels des Stützflansches 26 abgestützt. Die Übereinanderanordnung ist ohne vertikale Überlappung vorgesehen.

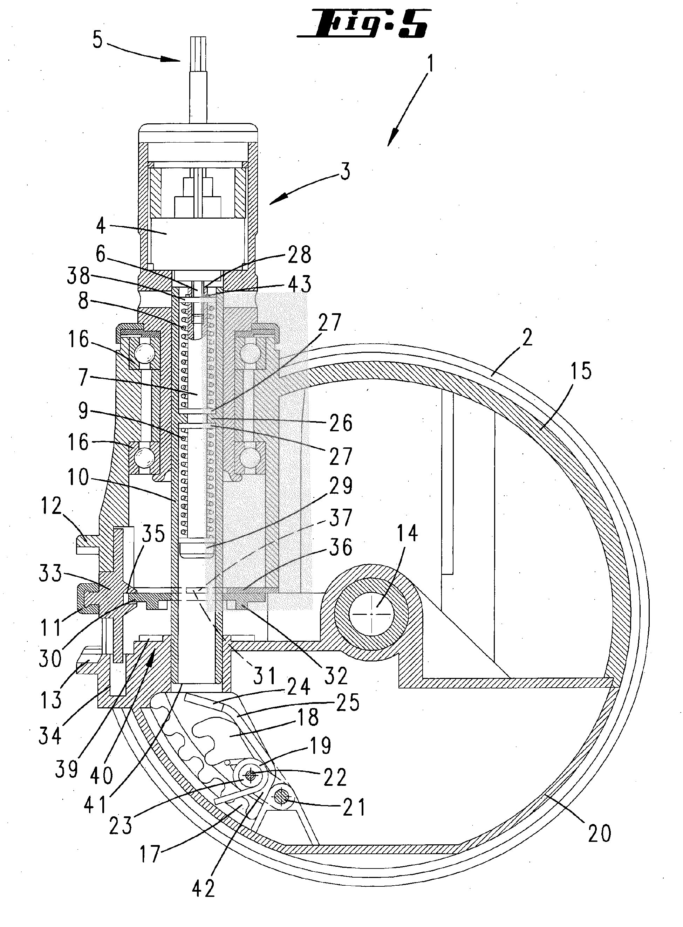

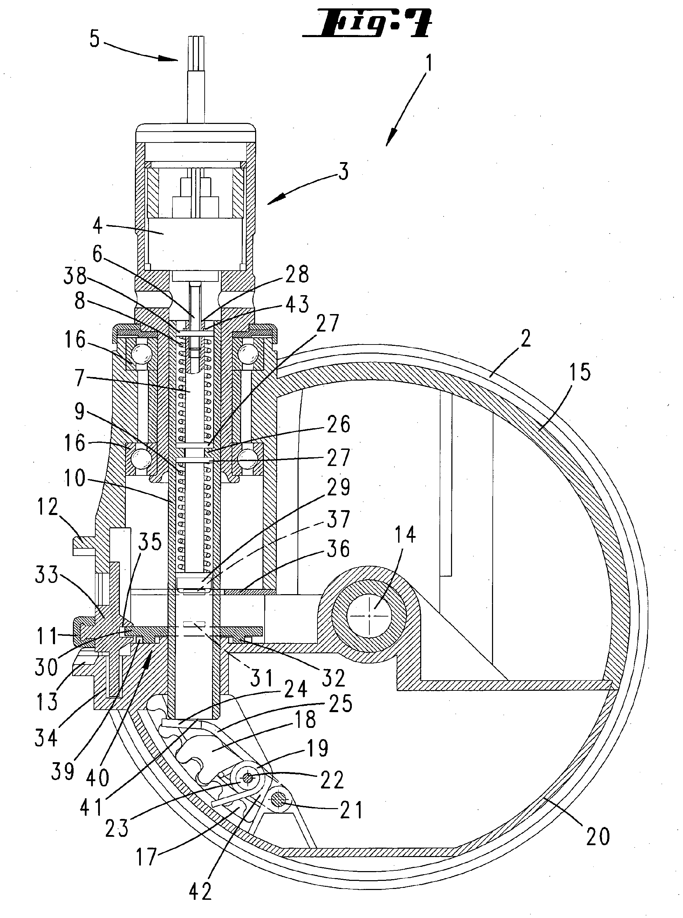

Die obere Feder 8 dient zur Bewegung des Beaufschlagungsteils 10 in die der Totalfeststellung entsprechende Stellung, siehe Figur 7, und die untere Feder 9 dient zur Bewegung des Beaufschlagungsteils 10 in die der Richtungsfeststellung entsprechende Stellung, siehe Figur 5.

Innerhalb des Beaufschlagungsteils 10 und koaxial hierzu erstreckt sich das Übertragungsteil 7. Das Übertragungsteil 7 ist bei beiden Ausführungsformen bevorzugt im Wesentlichen massiv ausgebildet, wobei es zugeordnet seinem oberen Ende 28 ein Innengewinde aufweist. Das Innengewinde wirkt mit dem Außengewinde des Linearteils 6 zusammen. Durch eine Drehbewegung des Rotors des Elektromotors 4, der hier bevorzugt entsprechend einer Mutter mit Innengewinde ausgebildet ist, kann so das Linearteil 6 und damit das Übertragungsteil 7 nach oben oder unten bewegt werden. Das Übertragungsteil 7 wird daher bevorzugt ebenfalls nur linear, also ohne eine Drehung auf- und abbewegt.

Unterseitig weist das Übertragungsteil 7 einen Kopf 29 auf, der entsprechend einem Schraubkopf gebildet ist. Der Kopf 29 kann auch ergänzend zur Führung innerhalb des Beaufschlagungsteils 10 dienen. Eine weitere Führungswirkung erbringt die Innenfläche des Stützflansches 26, der von dem Übertragungsteil 7 frei axial beweglich durchsetzt ist.

Oberseitig des Kopfes 29 ist eine weitere Unterlegscheibe, mit Bezug zu der zweiten Ausführungsform auch als Stützteil 48 bezeichnet, angeordnet, auf der sich die Druckfeder 9 unterseitig abstützt.

Die Abstützung der Feder 8 an dem Beaufschlagungsteil 10 und/oder die Abstützung der Feder 9 an dem Beaufschlagungsteil 10 und/oder die Abstützung der Druckfeder 44, sei es im unteren oder oberen Bereich, an dem Beaufschlagungsteil 10, ist ersichtlich jeweils von dem Übertragungsteil 7 durchfahrbar.

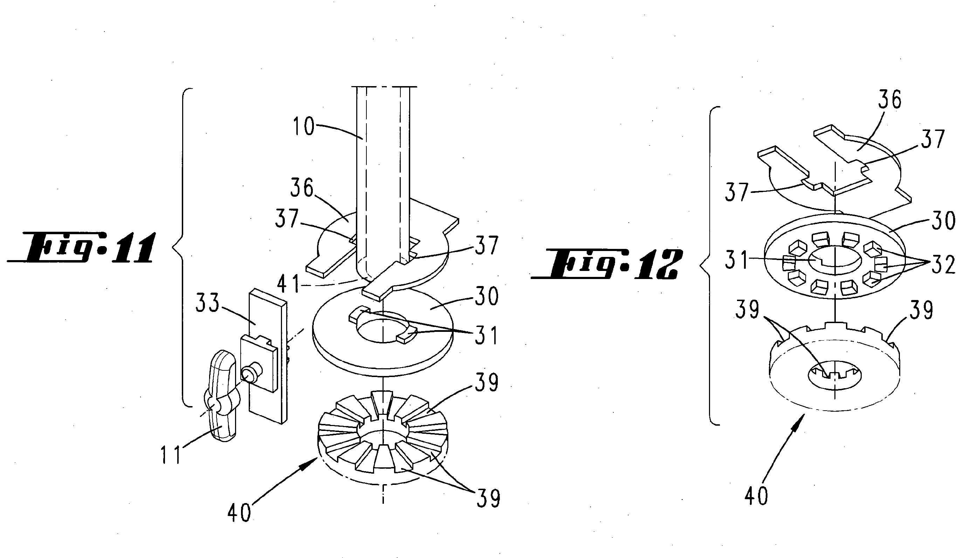

Das Beaufschlagungsteil 10 ist weiterhin, jedenfalls in Vertikalrichtung, fest verbunden mit einem als Ausleger 30 ausgebildeten Bewegungsfortsatz. Der Ausleger 30 kann auch bspw. mit dem Beaufschlagungsteil 10 verschweißt sein. Beim Ausführungsbeispiel sind an dem Ausleger 30, siehe Figuren 10 und 11, oberseitig Ausformungen 31 für die Richtungsfeststellung und unterseitig, siehe Figur 12, Vorsprünge 32 für die Richtungsfeststellung im Falle der Totalfeststellung ausgebildet. Die Anordnung des Auslegers 30 ist - insoweit auch bei beiden Ausführungsformen übereinstimmend - mit vertikalem Abstand zu dem unteren und/oder oberen Ende des Beaufschlagungsteils 10 vorgesehen. Weiter bevorzugt ist die Anordnung des Auslegers 30 außermittig bzgl. der vertikalen Höhe des Beaufschlagungsteils 10 vorgesehen. Nämlich bevorzugt näher dem unteren Ende des Beaufschlagungsteils 10. Nochmals bevorzugt entspricht der Abstand des Auslegers 30 zu einem unteren Ende des Beaufschlagungsteils 10 etwa einem Bereich des ein- bis dreifachen Durchmessers (außen) des Beaufschlagungsteils 10, ggf., wenn unterschiedlich, bezogen auf seinen unteren Bereich.

Der Ausleger 30 bewegt sich aufgrund seiner festen Verbindung mit dem Beaufschlagungsteil 10 zusammen mit dem Beaufschlagungsteil 10 in vertikaler Richtung.

Mit dem Ausleger 30 ist weiter die Handhabe 11 verbunden, und zwar bei der ersten Ausführungsform vermittels eines Schiebeteils 33. Das Schiebeteil 33 in gehäusefesten Führungen 34, insbesondere in seitlicher Richtung wirkend, lediglich vertikal beweglich aufgenommen.

Das Schiebeteil 33 ist beim Ausführungsbeispiel mit dem Ausleger 30 durch eine Formschlussverbindung 35 verbunden. Die Verbindung ist jedenfalls derart, dass eine Bewegung des Schiebeteils 33 in vertikaler Richtung unmittelbar auf den Ausleger 30 und damit auf das Beaufschlagungsteil 10 übertragen wird.

Die Handhabe 11, die relativ zu dem Schiebeteil 33 beziehungsweise gegebenenfalls unmittelbar relativ zu dem Ausleger 30 an diesem drehbar angeordnet ist, kann zur Notentriegelung, wenn etwa der Elektromotor 4 nicht betätigbar sein sollte, benutzt werden, wie nachstehend noch im Einzelnen erläutert.

Die Laufrolle 1 kann wie folgt betrieben werden:

Ausgehend von der Stellung gemäß den Figuren 1 bis 3 kann mittels des Elektromotors 4 das Linearteil 6 so bewegt werden, dass es zu einer vertikalen Bewegung des Übertragungsteils 7 kommt, vergleiche Stellung des Übertragungsteils 7 zwischen Figuren 3 und 5. Hierbei wird über die Feder 9, da sich die Tendenz zu einer Verringerung des Abstandes zwischen dem Kopf 29 des Übertragungsteils 7 und dem Stützflansch 26 des Beaufschlagungsteils 10 ergibt, eine Kraft auf das Beaufschlagungsteil 10 ausgeübt, die dieses nach vertikal oben bewegt. Das mit dem Beaufschlagungsteil 10 fest verbundene Auslegerteil 30 bewegt sich damit ebenfalls nach vertikal oben und komnt in Zusamnenwirkung mit einem gehäusefest angeordneten Richtungsfeststellteil 36. In dem Richtungsfeststellteil 36 sind Ausformungen 37 ausgebildet, in welche bei entsprechender Ausrichtung der Räder 2 der Laufrolle 1 die Ausformungen 31 (Rastaufnehmungen) einfahren, womit die Richtungsfeststellung, bezogen auf eine ausgewählte Richtung erreicht ist.

Eine Linearbewegung des Linearteils 6 des Elektromotors 4 in entgegengesetzter Richtung bewirkt ein Verfahren des Übertragungsteils 7 nach unten, also aus der Stellung der Figur 3 beziehungsweise der Figur 5 in die Stellung gemäß Figur 7. Hierbei bewirkt die Feder 8, die durch die Scheibe 38, unter Bezug auf die zweite Ausführungsform auch als Stützteil 45 bezeichnet, und das Sicherungselement 43 als Gegenlager axial fest an dem Übertragungsteil 7 abgestützt ist, eine Bewegung des Beaufschlagungsteils 10 nach unten. Ein Stirn-Ende 41 des Beaufschlagungsteils 10 wirkt hierdurch auf den Einwirkteil 24 ein, wodurch das Eingriffsteil 18 gegen die Wirkung der Schenkelfeder 19 in die Eingriffsstellung gemäß Figur 7 bewegt wird.

Zugleich bewegt sich mit dem Beaufschlagungsteil 10 das Auslegerteil 30 nach unten. Dessen unterseitig ausgebildete Vorsprünge 32 kommen in Eingriff mit den Halteausnehmungen 39 (Vorsprünge) an dem Feststellteil 40. Sie bewirken so die Richtungsfeststellung. Hierbei kann ersichtlich eine Richtung aus einer Vielzahl von unterschiedlichen Richtungen, die dann festgestellt ist, gegeben sein. Bei der alleinigen Richtungsfeststellung, siehe insbesondere Fig. 5 und die diesbezügliche Beschreibung, kann dagegen vorgesehen sein, nur eine Richtung (jeweils) festzustellen. Alternativ kann aber etwa wie bei der zweiten Ausführungsform beschrieben, auch eine Richtung aus einer Vielzahl von Richtungen festgestellt sein.

Das Feststellteil 40 ist gehäusefest angeordnet.

Im Hinblick darauf, dass Vorsorge zu treffen ist, dass der Elektromotor 4 einmal nicht betätigt werden kann, etwa wegen Stromausfall, ist eine Vorkehrung getroffen, dass von Hand die Richtungsfeststellung oder die Totalfeststellung aufgehoben werden kann.

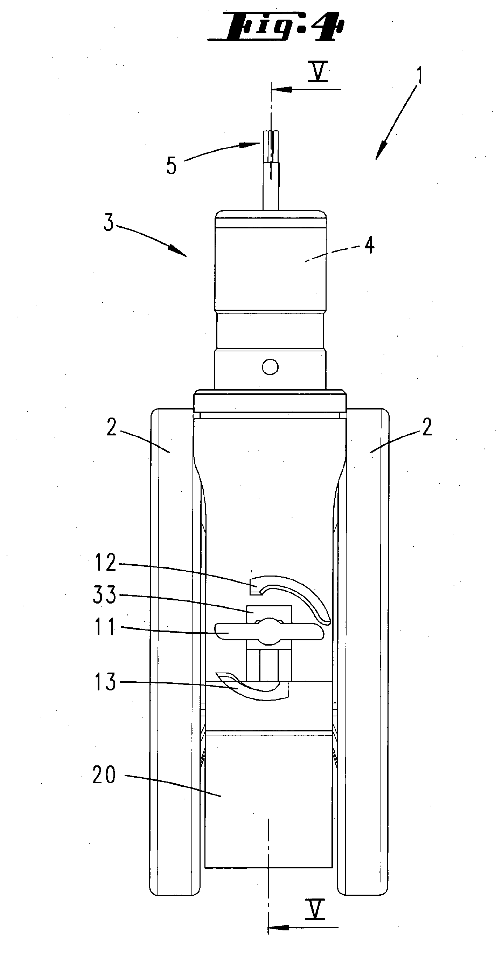

Hierzu ist lediglich eine Drehung der relativ zu dem Schiebeteil 33 drehbar an diesem angeordneten Handhabe 11 erforderlich. Befindet sich die Handhabe 11 zufolge der vorgenommenen Richtungsfeststellung in der Stellung gemäß Figur 4 kann sie sich durch Drehung entgegen dem Uhrzeigersinn an dem eine entsprechende, bevorzugt nicht kreisbogenförmige Abstützfläche aufweisenden Widerlager 12 abstützen, wodurch ohne eine Änderung der Stellung des Übertragungsteils 7 das Beaufschlagungsteil 10 unter Komprimierung der Feder 9 nach vertikal unten bewegt wird.

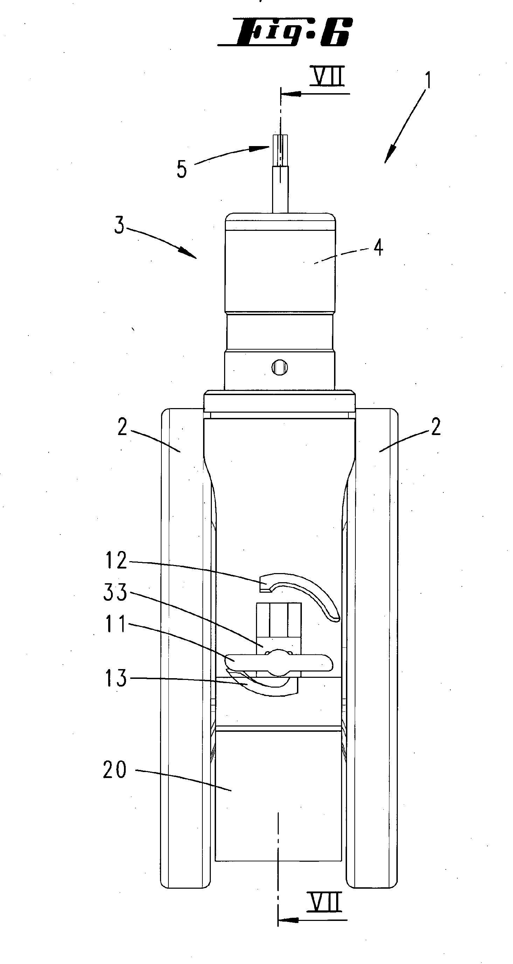

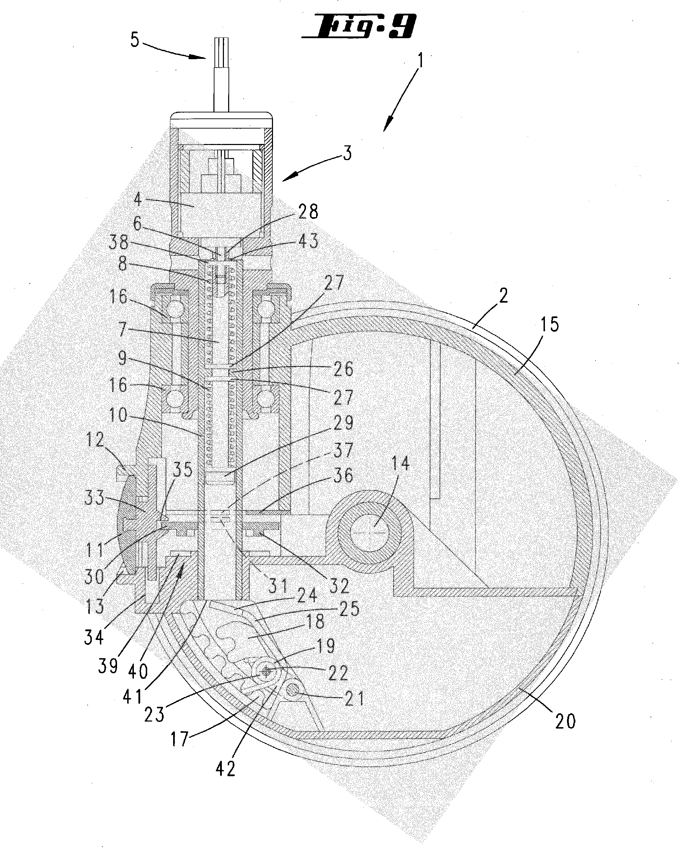

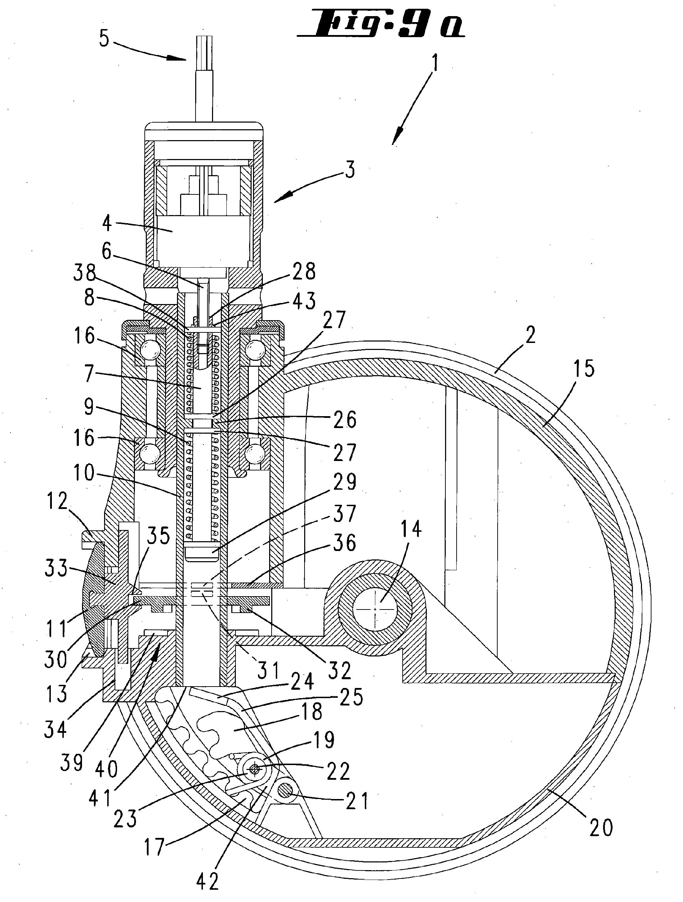

Befindet sich die Laufrolle 1 in der Totalfeststellung gemäß Figur 6, kann die Handhabe 11 in gleicher Weise durch Drehbetätigung entgegen dem Uhrzeigersinn sich an einem Widerlager, nunmehr dem unteren Widerlager 13, abstützen, so dass das Beaufschlagungsteil 10 entgegen der Wirkung der Feder 8, bei unveränderter Stellung des Übertragungsteils 7, nach oben bewegt wird. Die Stellung nach einer Notentriegelung aus der Totalfeststellung ist in Figur 9a dargestellt. Die Stellung der Handhabe entsprechend einer Notentriegelung kann verrastet sein.

Die Stellung des Beaufschlagungsteils 10 und des sich jeweils bei einer Notentriegelung nicht bewegenden Übertragungsteils 7 ist in den Figuren 9 und 9a wiedergegeben.

Die Handhabe 11 kann hinsichtlich ihrer Drehbeweglichkeit in ihre Neutralstellung gemäß Figur 1 federvorgespannt sein.

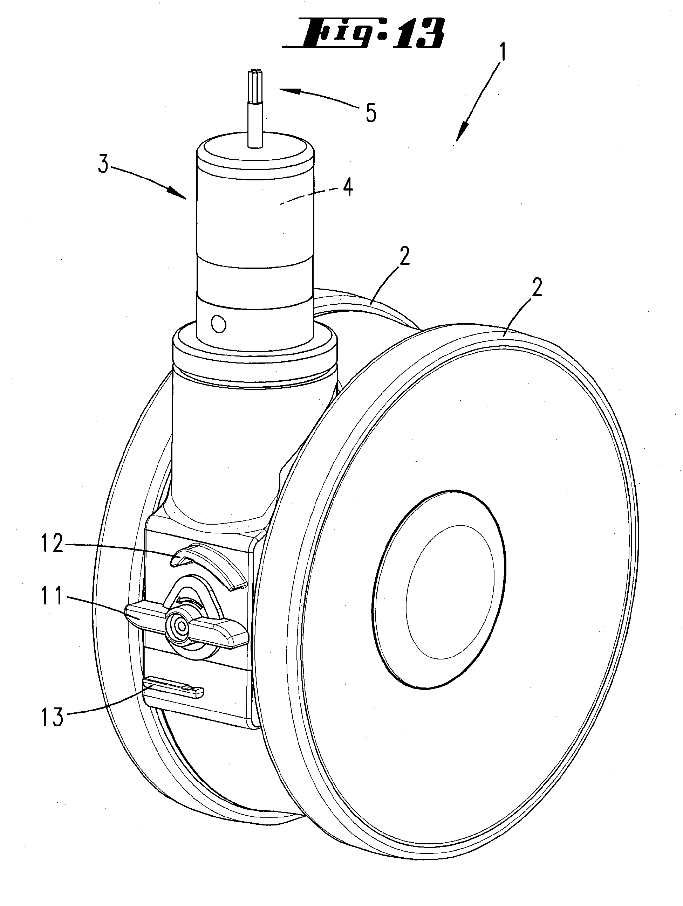

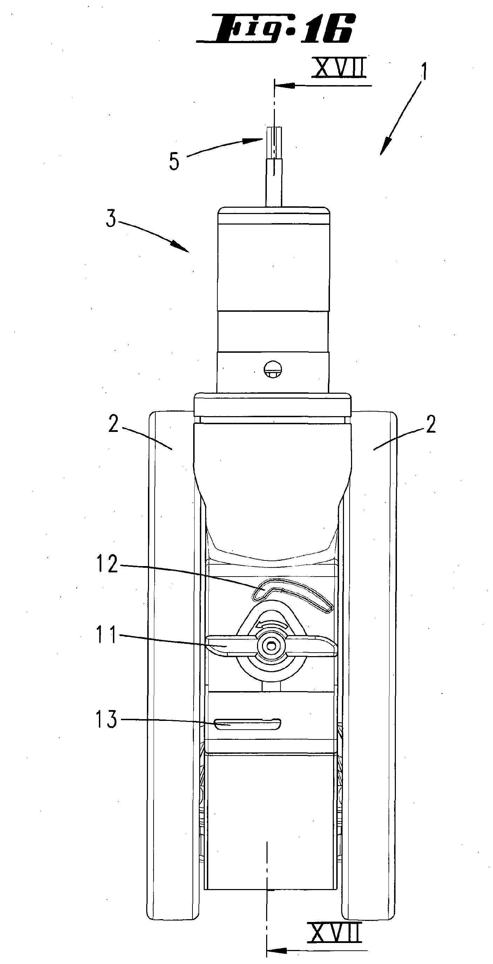

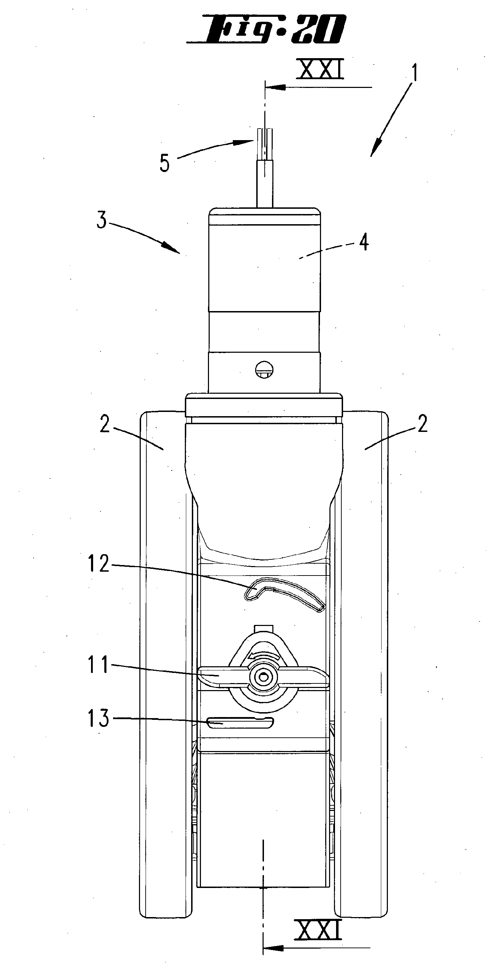

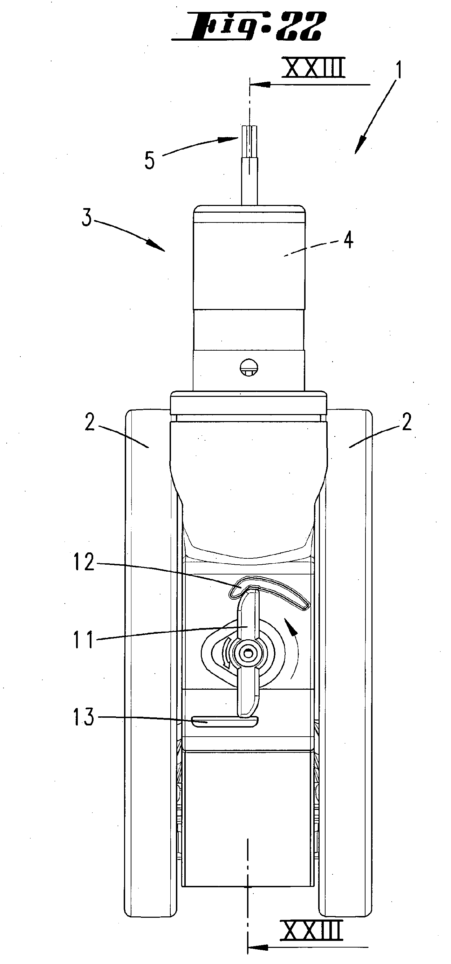

Um die Handhabe wieder in ihre Ausgangsstellung zu verbringen, ist eine händische Betätigung der Handhabe in ihre Neutralstellung erforderlich. Insbesondere mit Bezug zu den Figuren 13 bis 24 ist die weitere Ausführungsform beschrieben.

Ein wesentlicher Unterschied zu der zuvor beschriebenen Ausführungsform besteht darin, dass nur eine Feder zwischen dem Übertragungsteil 7 und dem Beaufschlagungsteil 10 vorgesehen ist, die Druckfeder 44.

Die Druckfeder 44 kann hinsichtlich einer Abstützung an dem Übertragungsteil 7 oder dem Beaufschlagungsteil 10 abwechselnd abgestützt sein.

Im oberen Bereich ist sie zunächst, vermittels eines Stützteiles 45, an dem Übertragungsteil 7 selbst abgestützt. Hierzu ist in weiterer Einzelheit an dem Übertragungsteil ein Gegenanschlag 46 für das Stützteil 45 ausgebildet. Der Gegenanschlag 46 ist weiter bevorzugt durch eine Verjüngung des Schaftdurchmessers des Übertragungsteils 7 erreicht. Die hierdurch gebildete Schulter bildet den Gegenanschlag für das Stützteil 45 nach oben.

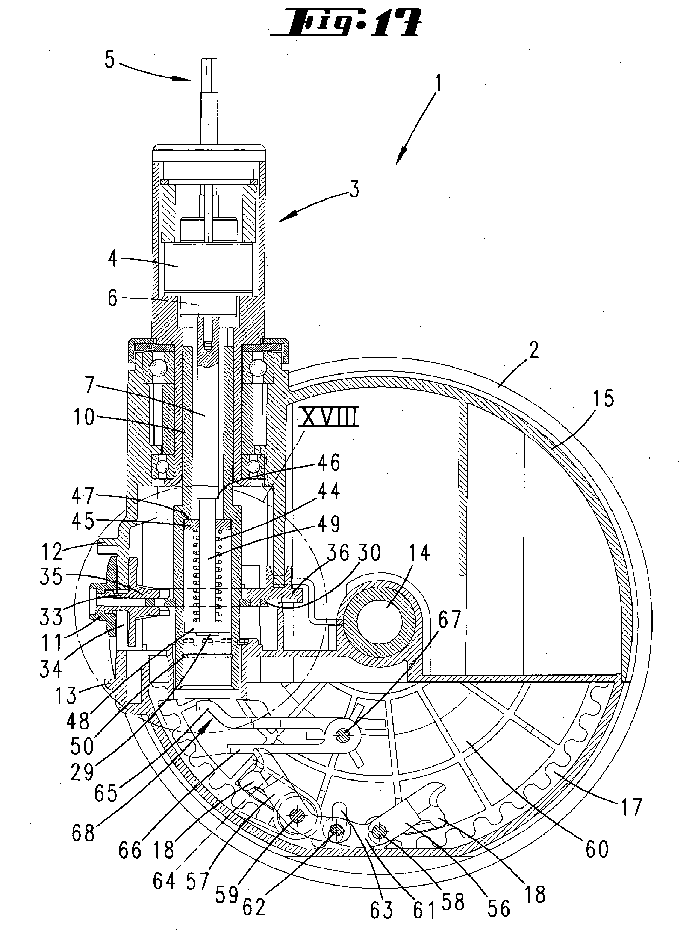

Wenn das Übertragungsteil 7, ausgehend von der Stellung der Figur 15 weiter nach oben verfährt, etwa in die Stellung der Fig. 17, kann jedoch das Stützteil 45 dem Gegenanschlag 46 an dem Übertragungsteil 7 nicht folgen, sondern bleibt oder gelangt zur Abstützung an dem Beaufschlagungsteil 10. Im Einzelnen ist hierfür an dem Beaufschlagungsteil 10 ein Gegenanschlag 47 ausgebildet, der in weiterer Einzelheit durch eine Stufe zufolge einer Vergrößerung des freien Innenmaßes des Beaufschlagungsteils 10 erreicht ist.

Insofern erfolgt bei einer Bewegung des Übertragungsteils 7 aus einer der Neutralstellung entsprechenden Stellung in die Richtungsfeststellung ein Wechsel in der Abstützung der Druckfeder 44, nämlich von der Abstützung an dem Übertragungsteil 7 zu der Abstützung an dem Beaufschlagungsteil 10. Das Stützteil 45 wechselt von einer Abstützung an dem Gegenanschlag 46 zu einer Abstützung an dem Gegenanschlag 47. Zugleich kann, soweit nicht zuvor schon gegeben, auch ein entsprechender Wechsel im unteren Bereich der Druckfeder 44 erfolgen. Das Stützteil 48 und damit die Druckfeder 44 ist jedenfalls nicht mehr auf dem Anschlag 50 abgestützt, sondern nur noch an dem Kopf 29 und damit an dem Übertragungsteil 7 selbst.

Das Stützteil 48 ist wie das Stützteil 45 relativ zu dem Übertragungsteil 7, jedenfalls im Bereich des durchmesserverdünnten Schaftabschnittes 49, verschiebbar.

Weiter ist auch hier unterseitig ein Anschlag an dem Beaufschlagungsteil 10 ausgebildet, der von dem Stützteil 48 nicht überfahrbar ist. Es handelt sich um den Anschlag 50. Dieser kann bspw. durch einen in eine Innennut des Übertragungsteils 10 an dieser Stelle eingesetzten Sprengring gebildet sein. Insofern ist hier auch ein Abstützbereich gebildet, der von dem Übertragungsteil 7 - hier nach unten - durchfahrbar ist.

Das Stützteil 48 ist zudem durch einen stirnseitigen Übergriff vermittels des schon angesprochenen und auch zu der ersten Ausführungsform beschriebenen Kopfes 29 des Übertragungsteils 7 übergriffen. Somit kann das Stützteil 48 ein Stirn-Ende des Übertragungsteils 7 nicht überlaufen.

Wenn nun, wiederum etwa entsprechend Figur 17, das Übertragungsteil 7 aus der Stellung Fig. 15 nach oben bewegt wird, wird entsprechend das Stützteil 48 mitgenommen. Die Druckfeder 44 wird somit verkürzt und ihre Druckkraft erhöht, soweit nicht, was zunächst bezweckt ist, das Beaufschlagungsteil 10 mit - zufolge der Federkraft - nach oben bewegt wird. Diese Bewegung nach oben mittels der Federkraft geschieht über das Stützteil 45 und den Gegenanschlag 47 an dem Beaufschlagungsteil 10.

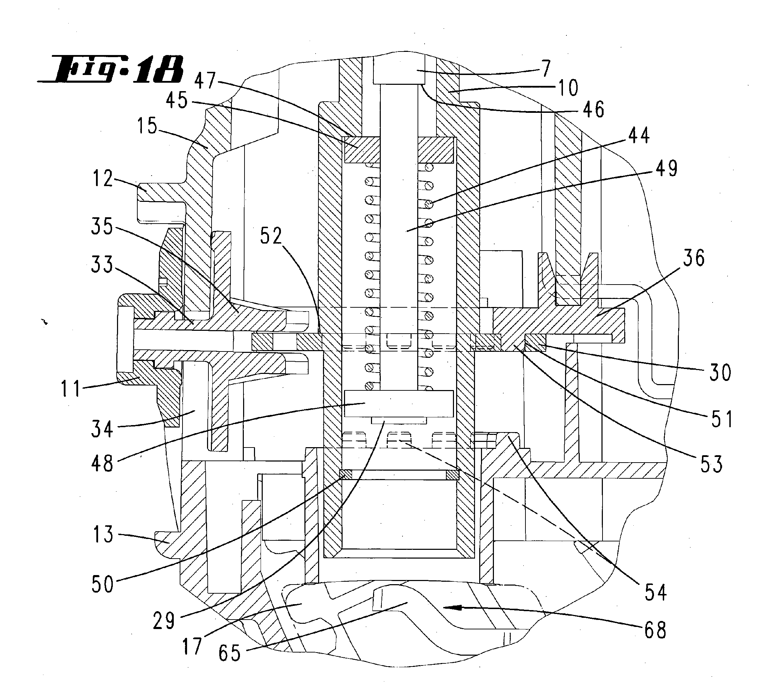

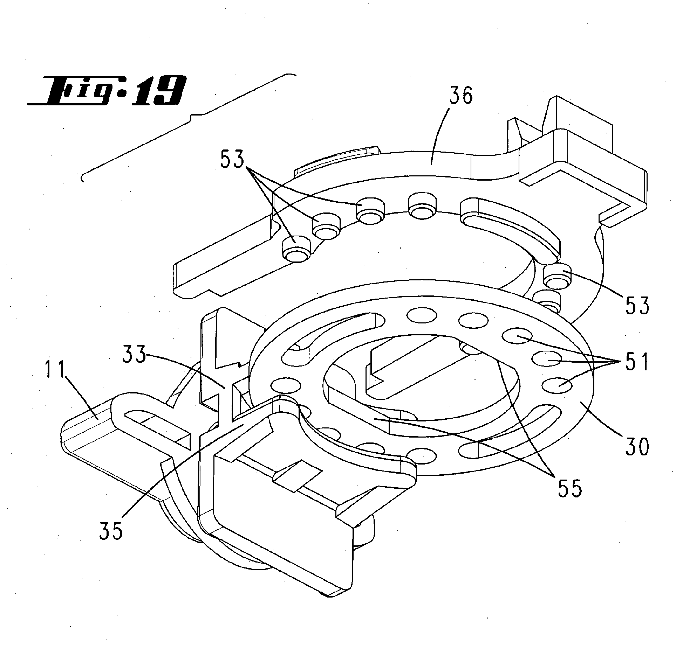

Mit Bezug zu den Figuren 18 und 19 ist der Aufbau und die Zusammenwirkung der Teile zur Erreichung der Richtungsfeststellung weiter erläutert.

Entsprechend auch der zunächst beschriebenen Ausführungsform ist mit dem Beaufschlagungsteil 10 ein Ausleger 30 verbunden, der bei dieser Ausführungsform Eingriffslöcher 51 aufweist. Die Richtungsfeststellung kann entsprechend aus einer Mehrzahl von möglichen Richtungen erfolgen. Der Ausleger 30 ist einseitig auch bei dieser Ausführungsform von einem Formschlussteil 35 umfasst, an welchem, außenseitig zu dem Gehäuse 15, die Handhabe 11 angebracht ist. Der Ausleger 30 ist im Bereich einer Verjüngung des - bevorzugt zylindrischen - Außendurchmessers des Beaufschlagungsteils 10 fest, jedenfalls bezogen auf eine Vertikalbewegung, mit dem Beaufschlagungsteil 10 verbunden. Wie ersichtlich nach oben bereits durch die aufgrund der Verjüngung gebildete Stufe 52. Im Weiteren aber auch durch eine bspw. Schrumpfverbindung oder auch eine Anschweißung oder sonstige feste Verbindung, im Hinblick auf eine Bewegung nach unten.

Der gehäusefest vorgesehene Richtungsfeststeller 36 ist bei dieser Ausführungsform mit nach unten weisenden Eingriffsvorsprüngen 53 ausgebildet. Bei entsprechendem Zusammenfahren greifen diese in die Eingriffslöcher 51 des Auslegers 30 ein.

Wie auch bei der ersten Ausführungsform wird durch die Richtungsfeststellung das zufolge der Wälzlager 16 relativ zu dem Montagezapfen 3 und damit insbesondere dem Beaufschlagungsteil 10 grundsätzlich drehbare Gehäuse 15 mit dem Beaufschlagungsteil 10 dreh verriegelt.

Im Hinblick auf eine Totalfeststellung sind korrespondierende Eingriffsvorsprünge 54 auch unterseitig des Auslegers 30, entsprechend einer Stellung der Totalfeststellung des Beaufschlagungsteils 10, ausgebildet. Wie ersichtlich, können diese bevorzugt einheitlich mit dem entsprechenden Gehäuseteil ausgebildet sein.

Wie insbesondere aus Figur 19 ersichtlich, kann der Ausleger 30, der bevorzugt scheibenartig ausgebildet ist, innenseitig einen von der Kreisform abweichende Innenkontur aufweisen. Es können, bevorzugt gegenüberliegende, Abflachungen 55 vorgesehen sein. Die Abflachungen 55 können mit entsprechenden Abflachungen an der Außenkontur des Übertragungsteils 10, was im Einzelnen nicht dargestellt ist, zusammenwirken.

Das Formschlussteil 35 ist auch bei dieser Ausführungsform unter Bildung eines Schiebeteils 33 in einer Führung 34 des Gehäuses aufgenommen. Hierdurch ist es vertikal relativ zu dem Gehäuse bewegbar. Dies unter entsprechender vertikaler Mitnahme der drehbar, jedoch ansonsten fest mit dem Schiebeteil bzw. dem Ausleger 30 verbundenen Handhabe 11.

Zur Totalfeststellung beaufschlagt das Beaufschlagungsteil 10 weiter die bei der zweiten Ausführungsform insgesamt vorgesehenen vier Eingriffsteile 18.

Die Eingriffsteile 18 sind jeweils an einem Hebelteil 56 bzw. 57 ausgebildet, die über Achsen 58, 59 gehäusefest gelagert sind. Der entsprechende, hier auch gitterartig verstärkt erkennbare Gehäuseteil 60 ist feststehend, während die Innenverzahnung 17 mit dem Rad entsprechend umläuft.

Die beiden Hebelteile 56, 57 sind an ihren zugewandten Enden über ein Gelenk 61 verbunden. Eine entsprechende Gelenkachse 62 kann in einem Langloch 63 sich im Wesentlichen in radialer Richtung bewegen.

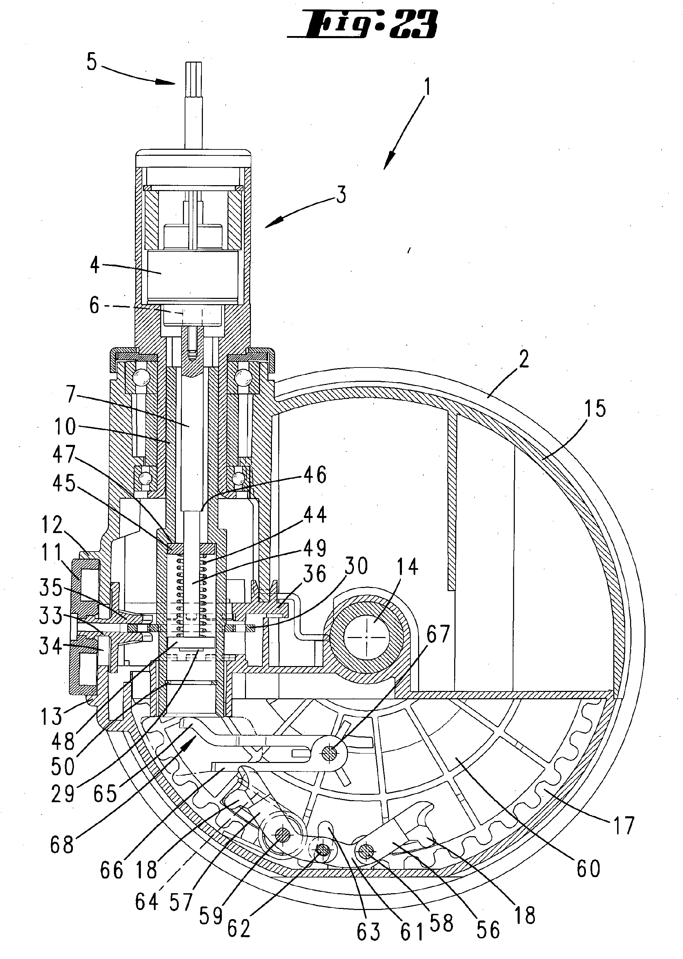

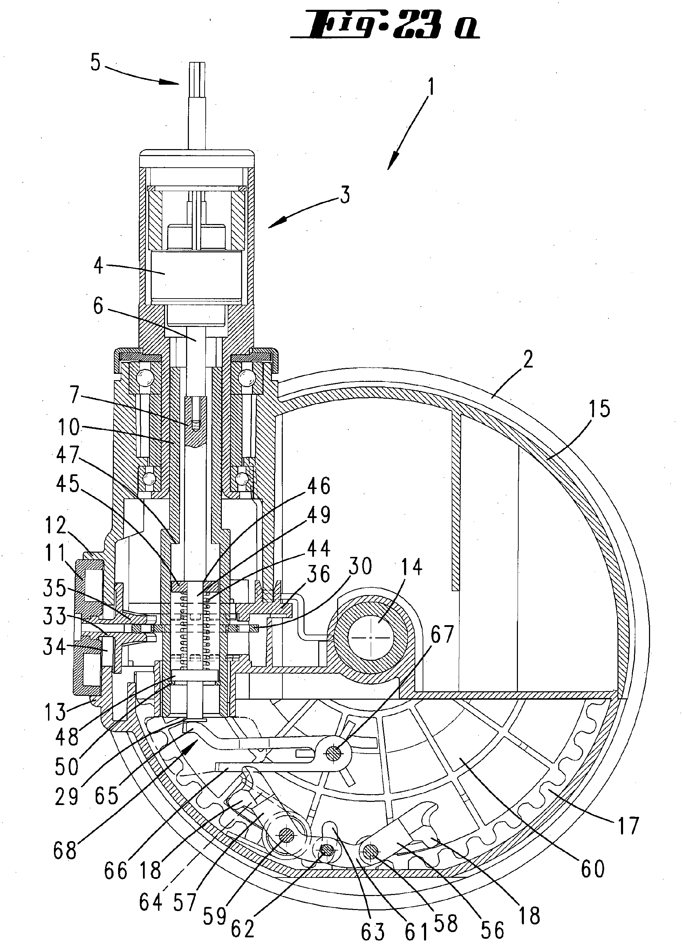

Weiter sind die Hebelteile 56, 57 durch eine Bügelfeder 64 in ihre Außereingriffstellung, wie etwa in Figur 23 dargestellt, vorgespannt.

Die Beaufschlagung durch das Beaufschlagungsteil 10 erfolgt in weiterer Einzelheit bei der zweiten Ausführungsform bevorzugt mittels eines Bügelteils 68. Dieses kann auch federnd ausgebildet sein.

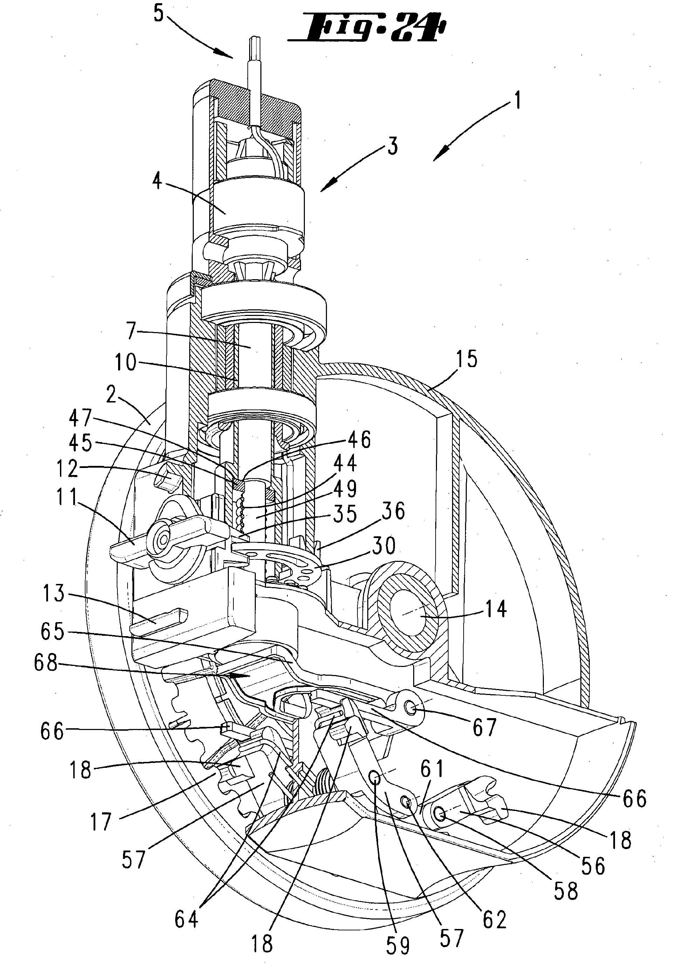

Wie weiter ersichtlich, ist das Bügelteil 68 in einer Seitenansicht im Wesentlichen U-förmig gebildet, mit zwei U-Schenkeln 65, 66, und einer Drehachse 67. Der in der Darstellung untere U-Schenkel 66 ist in weiterer Einzelheit, wie etwa aus Figur 24 hervorgeht, zweifach und horizontal beabstandet ausgebildet und wirkt jeweils auf eine zugeordnete Kopffläche eines jeweils einem der Räder zugeordneten Eingriffsteils 18 ein.

Die Ausbildung der Eingriffsteile 18, sowohl bezüglich der ersten Ausführungsform, wie aber auch insbesondere bezüglich der zweiten Ausführungsform, haben auch Bedeutung unabhängig von der tatsächlichen Ausbildung des Beaufschlagungsteils 10 und/ oder der Zusammenwirkung dieses Beaufschlagungsteils 10 mit dem Übertragungsteil 7.

So hinsichtlich der zweiten Ausführungsform insbesondere die Ausbildung der Eingriffsteile jeweils als Hebel, die an zugeordneten Enden gelenkig verbunden sind und/oder die Beaufschlagung nur eines der dem jeweiligen Rad zugeordneten zwei Eingriffsteile, um beide Eingriffsteile in die Eingriffsstellung zu bringen und/oder die Beaufschlagung der Eingriffsteile durch ein Bügelteil und/oder die weiteren Einzelheiten, die vorstehend diesbezüglich beschrieben sind.

Die Laufrolle 1 gemäß der zweiten Ausführungsform wird grundsätzlich in gleicher Weise betrieben wie die Laufrolle 1 der ersten Ausführungsform.

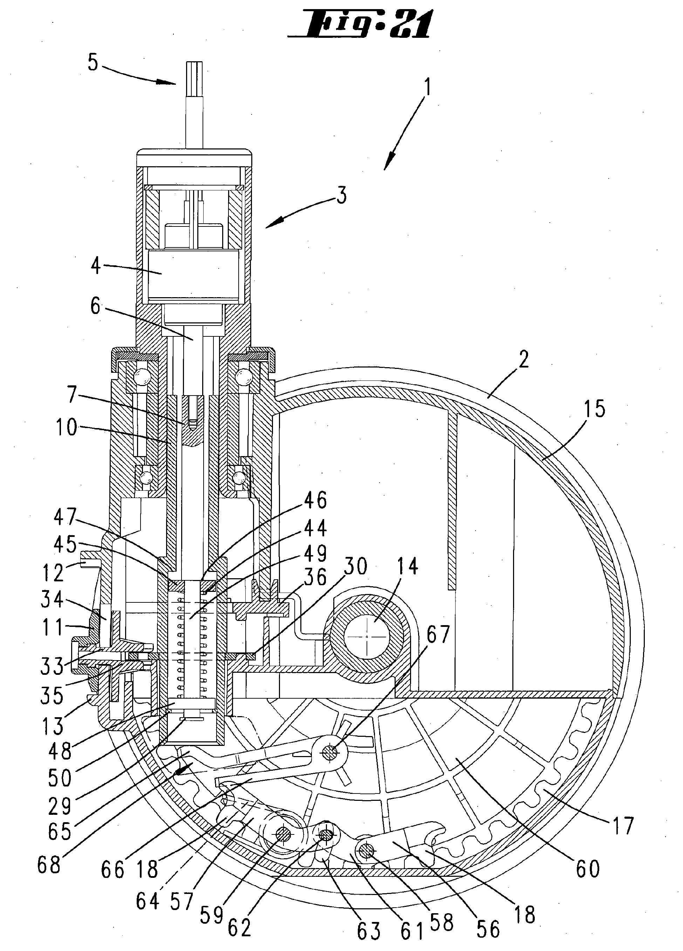

Ausgehend von der Stellung gemäß den Figuren 13 bis 15 wird mittels des Elektromotors 4 das Linearteil 6 so bewegt, dass es im Hinblick auf eine Totalfeststellung zu einer vertikalen Bewegung des Übertragungsteils 7 nach unten kommt, d.h. aus einer Stellung gemäß Figur 15 in eine Stellung gemäß Figur 21. Hierbei wird über die Druckfeder 44, die vermittels des Gegenanschlages 46 oberseitig nach unten gedrückt wird, durch Auflage des entgegengesetzten Endes vermittels des Stützteils 48 auf dem Anschlag 50 des Übertragungsteils 10, dieses nach unten gedrückt. Die Stirnfläche des Übertragungsteils 10 wirkt damit auf den oberen U-Schenkel des Bügelteils 68 ein, wie dies insbesondere auch aus Fig. 24 ersichtlich ist. Damit wird zugleich über den unteren Schenkel 66 Druckkraft auf die beiden Hebelteile 57 ausgewirkt, so dass die Eingriffsteile 18 in ihre Verriegelungsstellung gedrückt werden, gegen die Wirkung der Bügelfeder 64. Aufgrund der Hebelverbindung mit den Hebelteilen 56, die entsprechend auch zweifach vorgesehen sind, werden auch die gegenüberliegenden Eingriffsteile 18 in die Verriegelungsstellung gedrückt. Das mit dem Aufschlagsteil 10 fest verbundene Auslegerteil 30 bewegt sich auch bei dieser Ausführungsform damit ebenfalls nach vertikal unten. Die Eingriffslöcher 51 kommen in Zusammenwirkung mit den Eingriffsvorsprüngen 54 zur Richtungsfeststellung.

Eine Linearbewegung des Linearteils 6 des Elektromotors 4 in entgegengesetzter Richtung bewirkt ein Verfahren des Übertragungsteils 7 nach oben, also etwa aus der Stellung der Figur 15 bzw. der Figur 21 in die Stellung der Figur 17 (soweit nicht aus der Stellung der Figur 21 nur die Neutralstellung erreicht werden soll). Hierbei wird die Druckfeder 44 vermittels des Kopfes 29 und des Stützteils 48 nach oben mitgenommen, wodurch sich die Druckspannung auf das Stützteil 45 erhöht und dieses vermittels Anlage an dem Gegenanschlag 47 das Beaufschlagungsteil nach oben drückt, so dass die genannte Stellung erreicht werden kann.

Zugleich bewegt sich auch hierbei ersichtlich mit dem Beaufschlagungsteil 10 das Auslegerteil 30 und damit die Handhabe 11 nach oben. Vergleichbar der schon beschriebenen Notentriegelung kann diese auch bei dieser zweiten Ausführungsform vorgenommen werden.

An dem Beispiel der Notentriegelung, wobei diesem Merkmal aber auch unabhängig hiervon Bedeutung zukommt, ist die grundsätzlich hier erreichte Verschiebbarkeit des Beaufschlagungsteils 10 relativ zu dem feststehenden Übertragungsteil 7 erläutert. Dies jeweils gegen Federkraft. Bei dem zweiten Ausführungsbeispiel gegen Wirkung der jeweils selben Druckfeder 44.

In beiden Fällen der Notentriegelung, wie auch bei der ersten Ausführungsform, ist jeweils eine Drehbewegung der Handhabe 11 im Gegenuhrzeigersinn erforderlich. Hierbei stützt sich dann einer der Handhabe-Ausleger, entweder auf dem unteren Widerlager 13 oder dem oberen Widerlager 12 ab.

Wie ersichtlich ist bei dieser zweiten Ausführungsform, was entsprechend auch bei der ersten so vorgesehen sein könnte, das untere Widerlager als horizontal verlaufende vorstehende Rippe ausgebildet. In der Rippe ist oberseitig eine Rastausnehmung ausgebildet, in welcher der entsprechende Teil des Handhebels nach erfolgter Notentriegelung verrastend eingreift. Entsprechend ist bei dem oberen Widerlager 12 im Zenit der inneren Kurvenführung eine Aufnahme gegeben, die in gleicher Weise festsetzend auf den entsprechenden Teil des Handhebels nach dieser so erfolgten Notentriegelung wirkt.

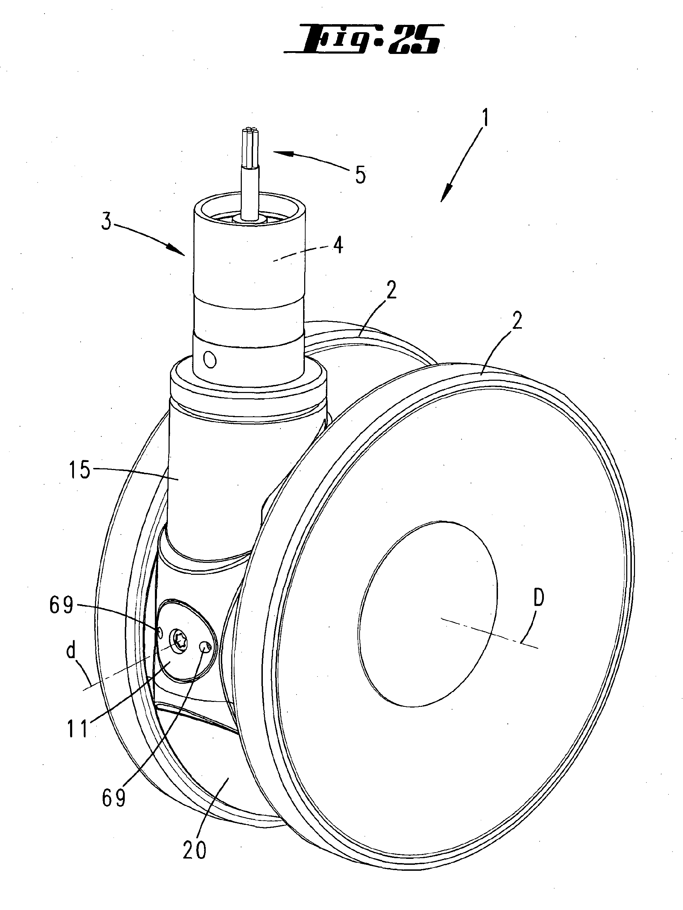

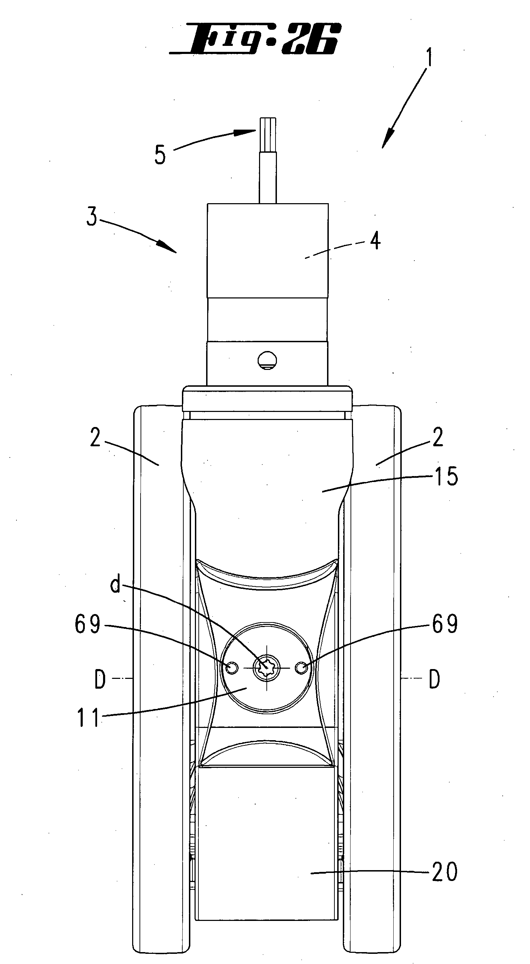

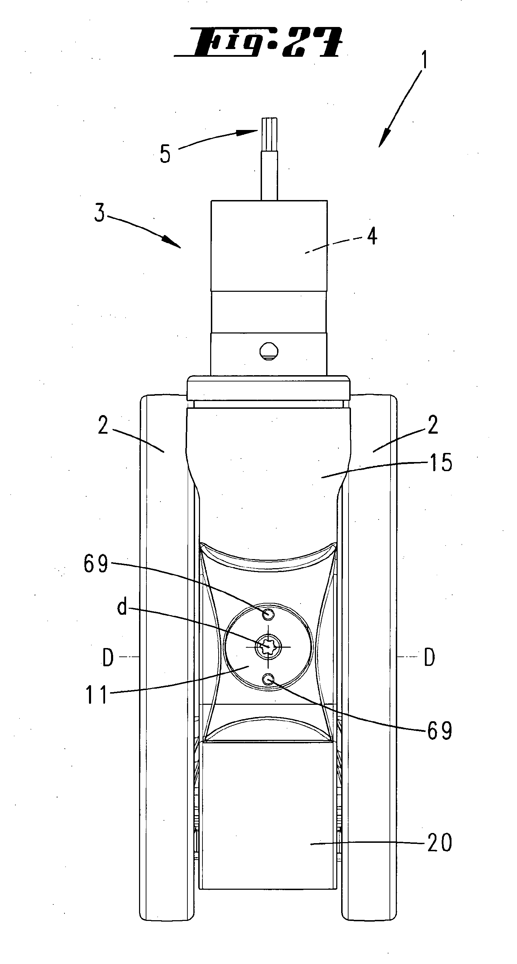

In den Figuren 25 bis 33 ist eine weitere Ausführungsform der Notentriegelung bzw. der Betätigungs-Handhabe dargestellt.

Die Betätigungs-Handhabe 11 ist bei dieser Ausführungsform als um eine Drehachse d drehbares Scheibenteil ausgebildet. Die Betätigungs-Handhabe 11 ist bei dieser Ausführungsform auch bevorzugt im Wesentlichen in die Außenkontur des Gehäuses 15, wie es in diesem Bereich umgebend gestaltet ist, einbezogen. Es sind praktisch keine wesentlich vorstehenden Bereiche ausgebildet. Eine Außenfläche der Betätigungs-Handhabe 11 setzt bevorzugt, jedenfalls in einer Neutral- oder Ausgangsstellung gem. Fig. 25, die sphärische Krümmung des umgebenden Gehäusebereiches fort.

Die Betätigung kann im Einzelnen bei dem dargestellten Ausführungsbeispiel mittels eines Gabelteils durch Eingriff in die beiden Betätigungsausnehmungen 69 vorgenommen werden. Die Betätigungsausnehmungen 69 sind beim Ausführungsbeispiel ersichtlich kreisrunde Vertiefungen, die bzgl. der Drehachse gegenüberliegend, auf einer Durchmesserlinie, ausgebildet sind. Alternativ kann auch bspw. ein Schlitz, der etwa mit einem Münzstück betätigbar ist, vorgesehen sein.

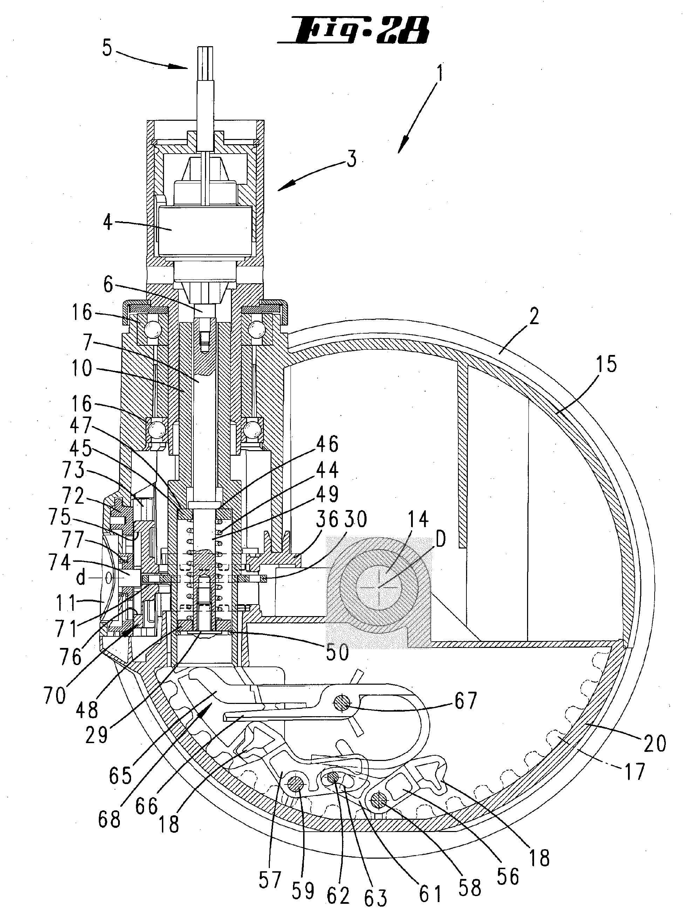

Wie sich im Weiteren etwa aus Fig. 28 ergibt, ist die Betätigungs-Handhabe 11 bei dem hier beschriebenen Ausführungsbeispiel, aber auch bei allen vorstehend beschriebenen Ausführungsbeispielen, bzgl. einer Drehachse D eines Rades 2 auf derselben Seite angeordnet wie das Beaufschlagungsteil 10.

Die geometrische Drehachse d der Betätigungshandhabe durchsetzt auch das Beaufschlagungsteil 10. Zudem ist sie beim Ausführungsbeispiel und bevorzugt in einer das Rad 2 durchsetzenden Horizontalebene verlaufend angeordnet. Beim Ausführungsbeispiel durchsetzt die Horizontalebene auch die körperliche Radachse 14 des Rades 2.

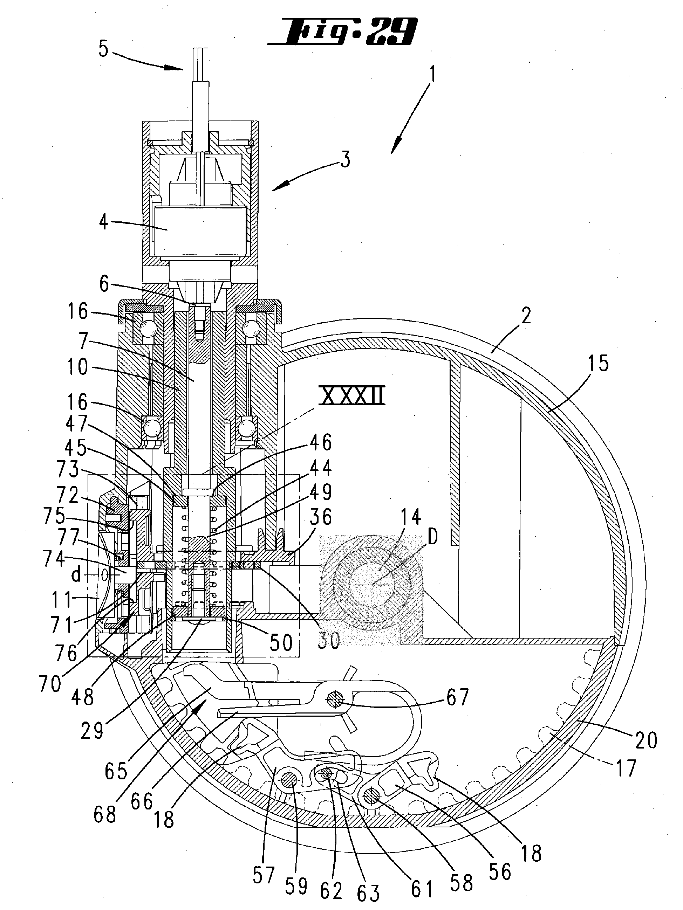

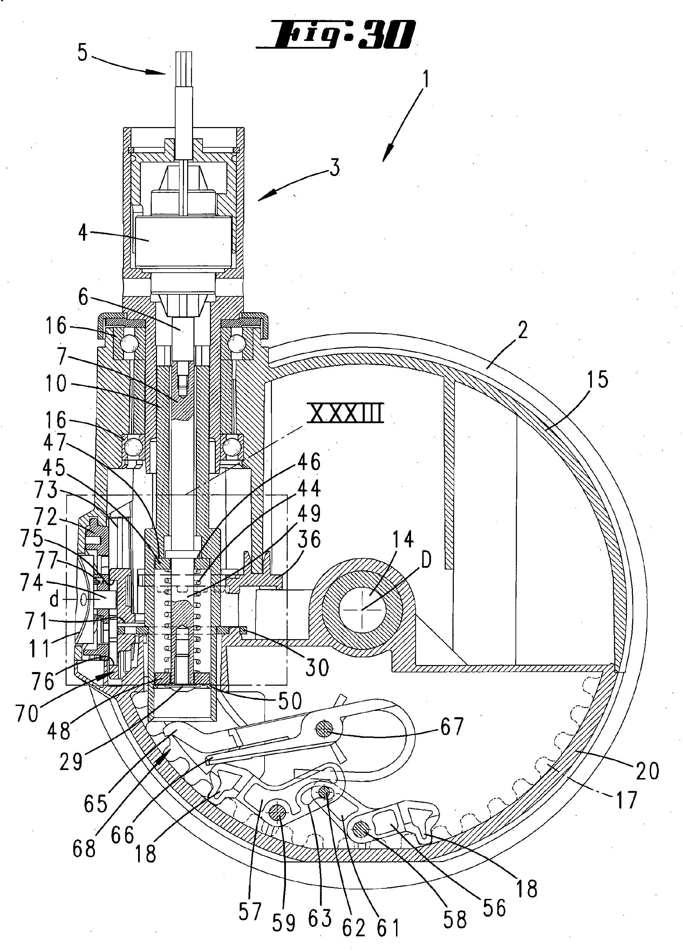

Im Zuge einer Betätigung der Feststelleinrichtung der Laufrolle, sei es in die Richtungsfeststellung gemäß Fig. 29 oder die Totalfeststellung gemäß Fig. 30, wird das Beaufschlagungsteil 10 entsprechend vertikal bewegt. Die Betätigungs-Handhabe 11 ist jedoch demgegenüber - vertikal - feststehend.

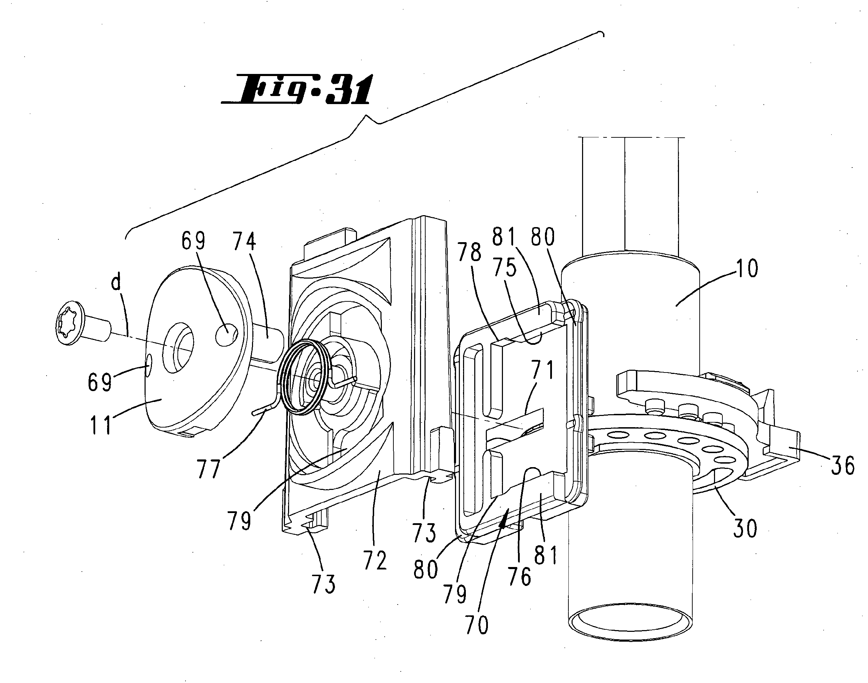

Mit dem Beaufschlagungsteil 10 wirkt auch bei dieser Ausführungsform, vgl. insbesondere Fig. 31, ein Ausleger 30 zusammen, der jedoch hier zunächst mit einem in Bewegungsrichtung des Beaufschlagungsteils 10 im Gehäuse 15 geführten Schiebeteil 70 zusammenwirkt. Wie auch etwa aus Fig. 28 ersichtlich ist, greift der Ausleger 30 hierzu in einen Horizontalschlitz 71 des Schiebeteils 70 ein.

Das Schiebeteil 70 ist in einem Gehäuse-Einsatzteil 72 geführt. Das GehäuseEinsatzteil 72 weist zu diesen Zweck gegenüberliegend und zueinander öffnend ausgebildete Führungsnuten 73 auf. Gegenüberliegend an den Längsrändern des insgesamt bevorzugt rechteckig gestalteten Schiebeteils 70 sind Führungsvorsprünge 80 ausgebildet, die in den Führungsnuten 73 aufgenommen sind. Die Betätigungs-Handhabe 11 weist in Richtung zum Beaufschlagungsteil 10 weisend einen Durchgreifzapfen 74 auf. Der Durchgreifzapfen 74 ist bzgl. der Drehachse d der Beaufschlagungs-Handhabe 11 exzentrisch angeordnet. Der Durchgreifzapfen 74 wirkt durchgreifend durch das Gehäuseeinsatzteil 72 unmittelbar auf das Schiebeteil 70 ein.

Das Schiebeteil 70 weist einen oberen Anschlag 75 und einen unteren Anschlag 76 auf. Die Anschläge 75, 76 sind beim Ausführungsbeispiel und bevorzugt an quer- bzw. horizontal verlaufenden Rippen 81 ausgebildet. Der Durchgreifzapfen 74 ist in der Stellung der Richtungsfeststellung gemäß Fig. 29 entsprechend näher an dem unteren Anschlag 76 und in der Stellung entsprechend der Totalfeststellung gemäß Fig. 30 näher an dem oberen Anschlag 75. Es kann sich auch eine Stellung jeweils nahe an oder gerade berührend bezüglich des Anschlags 75 bzw. 76 ergeben. Bevorzugt ist die Ausbildung jedenfalls derart, dass bei üblichem motorischen Verfahren des Beaufschlagungsteils 10 aus der Neutralstellung in die Stellung der Totalfeststellung (Fig. 30) oder die Stellung der Richtungsfeststellung (Fig. 29) noch keine (Dreh-) Bewegung der Betätigungs-Handhabe 11 erfolgt. Eine dann erfolgende Drehung der Betätigungs-Handhabe 11 bewegt den Durchgreifzapfen 74 - auf einer Kreisbahn - weiter nach oben oder nach unten, so dass die jeweilige Verriegelungsstellung hierdurch aufgehoben wird.

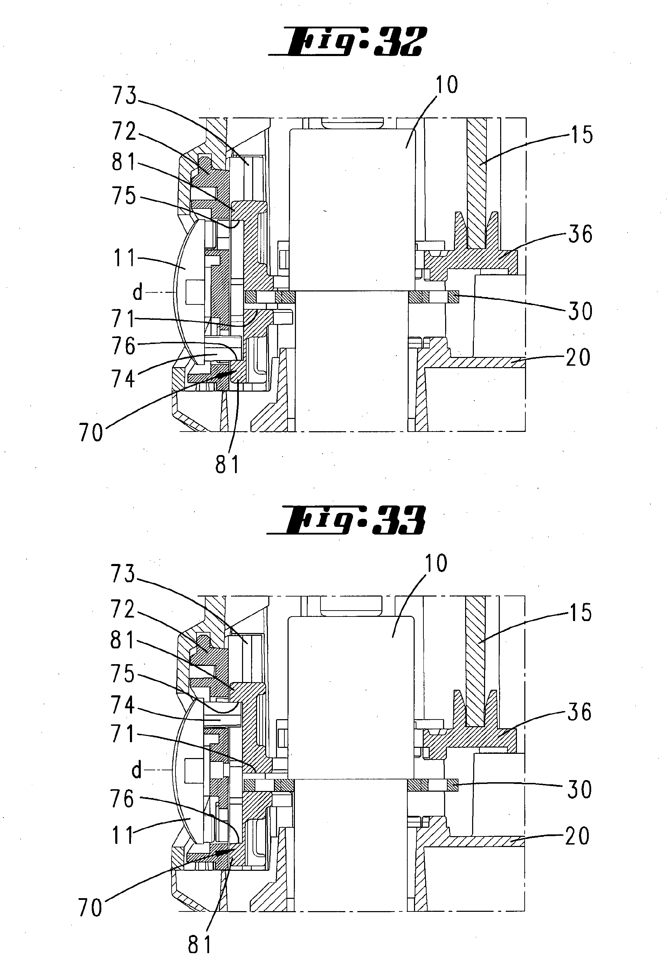

In den Figuren 32 und 33 ist eine jeweilige Stellung nach Drehung der Betätigungshandhabe 11 dargestellt. Entsprechend zeigt die Ausschnittsdarstellung der Fig. 32 die Stellung des Schiebeteils 70 und des Durchgreifzapfens 74 nach erfolgter Notentriegelung aus der zuvor motorisch eingenommenen Stellung der Richtungsfeststellung. Die Ausschnittsvergrößerung der Fig. 33 zeigt die Stellung des Durchgreifzapfens 74 und des Schiebeteils 70 nach erfolgter Notentriegelung aus der Stellung der Totalfeststellung. In beiden Stellungen liegt der Durchgreifzapfen 74 in der jeweiligen Rastöffnung 78 bzw. 79 ein.

Weiter ist die Betätigungs-Handhabe 11 durch eine Feder, bevorzugt eine Wendelfeder 77, in eine Neutralstellung vorgespannt. Bei Betätigung der Notentriegelung fährt der Drehzapfen 74 weiter in eine Rastöffnung 78 bzw. 79 im Bereich des oberen Anschlags 75 bzw. unteren Anschlags 76 ein. Die zufolge der Notentriegelung erreichte Entriegelungsstellung, die aber bevorzugt nicht einer Neutralstellung des Beaufschlagungsteils entspricht, ist damit festgesetzt.

Bei einer nachfolgenden (wieder) motorischen Beaufschlagung des Beaufschlagungsteils 10 kann zufolge der Federvorspannung der Betätigungs-Handhabe 11 wieder die Neutralstellung der Betätigungs-Handhabe 11 und damit des Durchgreifzapfens 74 erreicht werden. Hierzu ist erforderlich, bei dem beschriebenen Ausführungsbeispiel, dass das Beaufschlagungsteil 10 motorisch zunächst weiter in Richtung der durch die Betätigungs-Handhabe 11 im Falle einer Notentriegelung dem Beaufschlagungsteil 10 aufgezwungenen Bewegung bewegt wird. Also im Falle der Notentriegelung aus der Richtungsfeststellung weiterbewegt wird in Richtung einer Totalfeststellung und im Falle der Notentriegelung aus der Totalfeststellung weiterbewegt wird in Richtung der Richtungsfeststellung.

Die Ausführungsform der Figuren 25 bis 32 zeichnet sich weiter durch eine besondere Ausgestaltung des Bügelteils 68 bzw. eines Zwischenteils zwischen dem Beaufschlagungsteil 10 und einem oder mehreren, wobei die mehreren ggf. miteinander bewegungsgekoppelt sind, Hebelteil 57 aus.

Das Zwischenteil wirkt auf ein in Form bspw. des genannten Hebelteils 57 ausgebildetes Einwirkteil ein, das mit dem Rad 2, bevorzugt einer an dem Rad 2 ausgebildeten Innenverzahnung 17 im Zuge einer Totalfeststellung zur Einwirkung kommt. Hierzu ist das Eingriffsteil, also bspw. ein Hebelteil 57, zwischen einer Eingriffsstellung, vergleiche etwa Figur 30, und einer Freigabestellung, vergleiche etwa Figur 28, zu bewegen, und zwar bevorzugt drehend zu bewegen. Hierzu ist das Einwirkteil auch bevorzugt drehbar, vgl. auch Achse 59, an dem Rad 2 gelagert.

Das Zwischenteil, also bspw. das Bügelteil 68, bewegt das Eingriffsteil, also bspw. ein Hebelteil 57, in die Freigabestellung. Das Zwischenteil nimmt bei einer Bewegung des Beaufschlagungsteils 10 aus der Stellung der Totalfeststellung in eine Neutralstellung oder eine Stellung der Richtungsfeststellung, welcher Bewegung es, bevorzugt, zufolge Federvorspannung folgt, das Eingriffsteil in die Freigabestellung mit.

In weiterer Einzelheit ist hierzu vorgesehen, dass das Zwischenteil einen Beaufschlagungsvorsprung 82 aufweist, der verbunden mit oder weiter bevorzugt materialeinheitlich einteilig mit dem Zwischenteil, also bspw. dem Bügelteil 68, ausgebildet ist. Dieser Beaufschlagungsvorsprung 82 ist weiter bevorzugt ein federbarer Vorsprung. Darüber hinaus bevorzugt erbringt der Beaufschlagungsvorsprung 82 zugleich, wenn eine Belastung durch das Beaufschlagungsteil 10, in dem dieses etwa nach vertikal oben zurück verfährt, eine Belastung des Eingriffsteils, das bevorzugt als Hebelteil ausgebildet ist, in die Freigabestellung.

Besonders bevorzugt ist ein Hebelteil 56, 57, - jeweils - an einem Hebelfortsatz derart belastet, dass bei einer Bewegung, die dieser Belastung nachgibt, das Eingriffsteil aus der Eingriffsstellung entfernt wird, also das Rad 2 frei drehen kann. Diese Belastung wird durch das Beaufschlagungsteil bevorzugt ständig erbracht. Die Belastung wird jedoch übertroffen bei einer Bewegung des Beaufschlagungsteils 10 in die Stellung der Totalfeststellung, da hierbei die größere Kraft vermittels des Bügelteils 65 bzw. speziell des U-Schenkels 66 auf den anderen Hebelabschnitt des Hebelteils 57 ausgeübt wird und damit das Eingriffsteil zwangsweise in die Eingriffsstellung bewegt wird. Dasselbe Zwischenteil, insbesondere das Bügelteil 68, beaufschlagt also zweifach dasselbe Eingriffsteil, wobei eine Beaufschlagung mit größerer Kraft erfolgt als die andere.

Bezüglich einer Drehachse 67, mit welcher das Zwischenteil drehbeweglich an dem Rad 2, bevorzugt dem Unterteil 20, befestigt ist, ist in Bezug auf eine Vertikale bei normaler Nutzungsstellung der Laufrolle 1 der Beaufschlagungsvorsprung 82 zumindest teilweise auf einer Seite der Drehachse 67 angeordnet und der U-Schenkel 65 auf der anderen Seite.

Dadurch, dass weiter bevorzugt, wie dargestellt und beschrieben, zwei Eingriffsteile 56, 57, die beide hebelartig ausgebildet sind, getriebemäßig miteinander verbunden sind, zufolge des Gelenks 62, das etwa durch ein in einem entsprechenden Langloch laufenden Zapfen gebildet sein kann, reicht die beschriebene Beaufschlagung nur eines Hebelteils 56 oder 57 aus, um auch das andere zu bewegen. Grundsätzlich könnte aber auch bspw. die Beaufschlagung in die Eingriffstellung bezüglich des einen Hebelteils 57 und die Beaufschlagung hinsichtlich der Rückstellung in die Freigabestellung hinsichtlich des anderen Hebelteils 56 erfolgen.

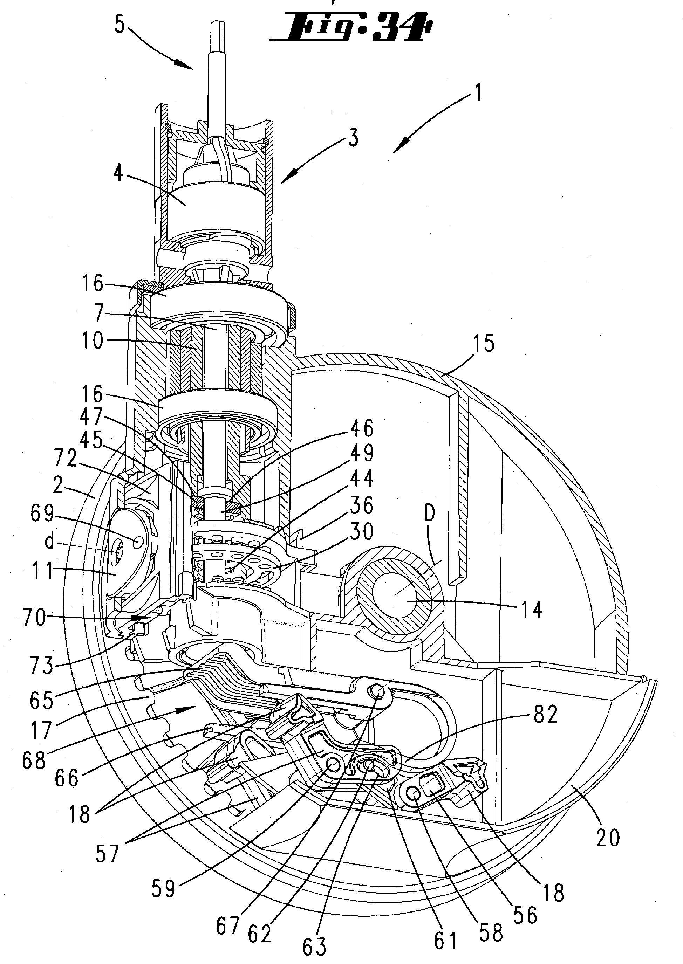

Hinsichtlich letzterem wird insbesondere auf die Darstellung gemäß Figur 34 verwiesen.

### Bezugszeichenliste

| | | | |
|---|---|---|---|
| 1 | Laufrolle | 25 | Seiten-Einwirkabschnitte |
| 2 | Rad | 26 | Stützteil |
| 3 | Montagezapfen | 27 | Unterlegscheibe |
| 4 | Elektromotor | 28 | oberes Ende |
| 5 | Stromanschluss | 29 | Kopf |
| 6 | Linearteil | 30 | Ausleger |
| 7 | Übertragungsteil | 31 | Ausformung |
| 8 | Druckfeder | 32 | Vorsprung |
| 9 | Druckfeder | 33 | Schiebeteil |
| 10 | Beaufschlagungsteil | 34 | Führung |
| 11 | Handhabe zur Betätigungshandhabe | 35 | Formschlussteil |
| | | 36 | Richtungsfeststeller |
| 12 | Widerlager | 37 | Rastausnehmung |
| 13 | Widerlager | 38 | Scheibe |
| 14 | Achse | 39 | Halteausnehmung |
| 15 | Gehäuse | 40 | Feststellteil |
| 16 | Wälzlager | 41 | Stirn-Ende |
| 17 | Innenverzahnung | 42 | Schwenkteil (Schenkelteil) |
| 18 | Eingriffsteil | | |
| 19 | Schenkelfeder | 43 | Sicherungselement |
| 20 | Unterteil | 44 | Druckfeder |
| 21 | Achse | 45 | Stützteil |
| 22 | Achse | 46 | Gegenanschlag (von 7) |
| 23 | Lageraufnahme | 47 | Gegenanschlag (von 10) |
| 24 | Einwirkteil | 48 | Stützteil |
| 49 | Schaftabschnitt | 76 | Anschlag |
| 50 | Anschlag | 77 | Wendelfeder |
| 51 | Eingriffslöcher | 78 | Rastöffnung |
| 52 | Stufe | 79 | Rastöffnung |
| 53 | Eingriffsvorsprung | 80 | Führungsvorsprung |
| 54 | Eingriffsvorsprung | 81 | Rippe |
| 55 | Abflachung | 82 | Beaufschlagungsvorsprung |
| 56 | Hebelteil | | |
| 57 | Hebelteil | | |
| 58 | Achse | | |
| 59 | Achse | | |
| 60 | Gehäuse | | |
| 61 | Gelenk | | |
| 62 | Gelenk | | |
| 63 | Lager | | |
| 64 | Bügelfeder | | |
| 65 | U-Schenkel | | |
| 66 | U-Schenkel | | |
| 67 | Drehachse | | |
| 68 | Bügelteil | | |
| 69 | Betätigungsausnehmung | | |
| 70 | Schiebeteil | | |
| 71 | Horizontalschlitz | | |
| 72 | Gehäuse-Einsatzteil | | |
| 73 | Führungsnut | | |
| 74 | Durchgreifzapfen | | |
| 75 | Anschlag | | |

## Patentansprüche

1. Laufrolle (1) mit vorzugsweise zwei Rädern (2) und einer Feststellvorrichtung, wobei die Feststellvorrichtung von einem Beaufschlagungsteil (10) zum Lösen oder Festsetzen beaufschlagt ist und das Beaufschlagungsteil (10) durch einen Antrieb bewegbar ist, wobei eine durch den Antrieb erzeugte Bewegung eines Übertragungsteils (7) über Federkraft zur Bewegung des Beaufschlagungsteils (10) auf dieses übertragen wird, und wobei eine Feder (8, 9,44) an dem Übertragungsteil abgestützt ist, **dadurch gekennzeichnet, dass** ein für die Feder (8, 9, 44) an dem Beaufschlagungsteil (10) ausgebildeter Abstützbereich von dem Übertragungsteil (7) durchfahrbar ist.

2. Laufrolle nach Anspruch 1, **dadurch gekennzeichnet, dass** die Feder (8, 9, 44), vorzugsweise nach oben, von einem Abstützbereich an dem Übertragungsteil (7) abhebbar ist.

3. Laufrolle nach einem der Ansprüche 1 oder 2, **dadurch gekennzeichnet, dass** die Feder (8, 9,44) mittels des Übertragungsteils (7) von einem Abstützbereich an dem Beaufschlagungsteil (10) abhebbar ist.

4. Laufrolle nach einem der Ansprüche 1 bis 3, **dadurch gekennzeichnet, dass** das Beaufschlagungsteil (10) einen unteren, nach unten offenen zentralen Raum ausbildet, in dem die Feder (8, 9,44) aufgenommen ist.

5. Laufrolle nach einem der Ansprüche 2 bis 4, **dadurch gekennzeichnet, dass** an dem Übertragungsteil (7) ein oberer Abstützbereich für die Feder (8, 9, 44) ausgebildet ist und dass die Feder (8, 9, 44) von dem Abstützbereich nach unten abhebbar ist.

6. Laufrolle nach einem der vorhergehenden Ansprüche, **dadurch gekennzeichnet, dass** das Übertragungsteil (7) innerhalb des Beaufschlagungsteils (10) angeordnet ist.

7. Laufrolle nach einem der vorhergehenden Ansprüche, **dadurch gekennzeichnet, dass** das Beaufschlagungsteil (10) mittels eines federbaren Zwischenteils auf ein Eingriffsteil einwirkt, dass das Eingriffsteil in dem Rad zur Bewegung zwischen einer Eingriffsstellung und einer Freigabestellung drehbeweglich gelagert ist und das Zwischenteil des Eingriffsteils in die Freigabestellung bewegt.

8. Laufrolle nach einem der vorhergehenden Ansprüche, **dadurch gekennzeichnet, dass** das Beaufschlagungsteil (10) zur Durchführung einer Notentriegelung, mittels einer von außen zugänglichen Handhabe (11), betätigbar ist.

9. Laufrolle nach Anspruch 8, **dadurch gekennzeichnet, dass** die Handhabe (11) mit dem Beaufschlagungsteil (10) verfährt und/oder fest mit dem Beaufschlagungsteil (10) verbunden ist.

10. Laufrolle nach einem der Ansprüche 8 bis 9, **dadurch gekennzeichnet, dass** das Beaufschlagungsteil (10) mittels der Handhabe (11), vorzugsweise unter Mitnahme des Abstützbereiches oder des Stützbereiches der Feder (8, 9, 44) relativ zu dem feststehenden Übertragungsteil (7) bewegbar ist.

11. Laufrolle nach einem der Ansprüche 8 bis 10, **dadurch gekennzeichnet, dass** die Handhabe (11) relativ zu einem feststehenden Widerlager (12,13) bewegbar ist.

12. Laufrolle nach einem der vorhergehenden Ansprüche, **dadurch gekennzeichnet, dass** nur eine Feder (8, 9, 44) vorgesehen ist.

13. Laufrolle nach einem der vorhergehenden Ansprüche, **dadurch gekennzeichnet, dass** zwei Federn (8, 9) vorgesehen sind, eine, die zur Bewegung des Beaufschlagungsteils (10) in eine der Totalfeststellung entsprechende Stellung erforderlich ist und eine Feder (8, 9, 44), die zur Bewegung des Beaufschlagungsteils (10) in eine der Richtungsfeststellung entsprechende Stellung erforderlich ist, wobei, bevorzugt, die Federn (8, 9, 44) übereinander angeordnet sind und/ oder die obere Feder (8) innerhalb des Beaufschlagungsteils (10) angeordnet ist und/ oder die untere Feder (9) innerhalb des Beaufschlagungsteils (10) angeordnet ist.

14. Laufrolle nach Anspruch 13, **dadurch gekennzeichnet, dass** die untere Feder (9) mit ihrem oberen Ende und die obere Feder (8) mit ihrem unteren Ende an dem Beaufschlagungsteil (10) abgestützt ist.

15. Laufrolle nach einem der vorhergehenden Ansprüche, **dadurch gekennzeichnet, dass** mindestens eine, bevorzugt beide Federn (8, 9, 44) außerhalb des Übertragungsteils (7) angeordnet sind.

## Claims

1. A roller (1), preferably comprising two wheels (2) and a locking device, an activating part (10) acting on the locking device for releasing or locking, and the activating part (10) being movable by a drive, a movement of a transmission part (7) that is generated by said drive being transmitted via spring force to the activating part (10) for moving same, and a spring (8, 9, 44) being supported on the transmission part, **characterized in that** a support region for the spring (8, 9, 44) is formed on the activating part (10), through which region the transmission part (7) can pass.

2. The roller according to claim 1, **characterized in that** the spring (8, 9, 44) can be lifted off from a support region on the transmission part (7).

3. The roller according to either of claims 1 and 2, **characterized in that** the spring (8, 9, 44) can be lifted off from a support region on the activating part (10) by means of the transmission part (7).

4. The roller according to one of claims 1 to 3, **characterized in that** the activating part (10) forms a lower central chamber which is open at the bottom and in which the spring (8, 9, 44) is accommodated.

5. The roller according to one of claims 2 to 4, **characterized in that** an upper support region for the spring 8, 9, 44) is formed on the transmission part (7) and **in that** the spring (8, 9, 44) can be lifted off downwardly from the support region.

6. The roller according to one of preceding claims, **characterized in that** the transmission part (7) is disposed within the activating part (10).

7. The roller according to one of preceding claims, **characterized in that** the actuating part (10) acts on an engagement part by means of a springlike intermediate part, **in that** the intermediate part is pivotably mounted in the wheel for movement between an engagement position and a release position, and the intermediate part of the engagement part moves into the release position.

8. The roller according to one of preceding claims, **characterized in that** for carrying out an emergency release, the activating part (10) can be actuated by means of a handle (11) that is accessible from the outside.

9. The roller according to claim 8, **characterized in that** the handle (11) moves together with the activating part (10) and/or is fixedly connected to the activating part (10).

10. The roller according to one of claims 8 to 9, **characterized in that** the activating part (10) can be moved, preferably while carrying along the supporting region or the support region for the spring (8, 9, 44),relative to the stationary transmission part (7) means of the handle (11) .

11. The roller according to one of claims 8 to 10, **characterized in that** that the handle (11) can be moved relative to a stationary abutment (12, 13).

12. The roller according to one of preceding claims, **characterized in that** only one spring (8, 9, 44) is provided.

13. The roller according to one of preceding claims, **characterized in that** two springs (8, 9) are provided, one spring being required for moving the activating part (10) into a position corresponding to the total lock, and one spring (8, 9, 44) being required for moving the activating part (10) into a position corresponding to the directional lock, whereby, preferably, the springs (8, 9, 44) are arranged one above the other and/or the upper spring (8) is situated within the activating part (10) and/or the lower spring (9) is situated within the activating part (10) .

14. The roller according to claim 13, **characterized in that** the lower spring (9) is supported by its upper end on the activating part (10), and the upper spring (8) is supported by its lower end on the activating part.

15. The roller according to one of preceding claims, **characterized in that** at least one, preferably both springs (8, 9, 44) are situated outside the transmission part (7) .

## Revendications

1. Galet de roulement (1) comprenant de préférence deux roues (2) et un dispositif de blocage, le dispositif de blocage étant soumis à l'action d'une pièce de sollicitation (10) aux fins du blocage ou du déblocage et la pièce de sollicitation (10) pouvant être déplacée par un entraînement, un déplacement d'une pièce de transmission (7) produit par l'entraînement étant transmis par une force de ressort à la pièce de sollicitation (10) afin de la déplacer et un ressort (8, 9, 44) prenant appui sur la pièce de transmission, **caractérisé en ce que** la pièce de transmission (7) peut circuler à travers une zone d'appui formée pour le ressort (8, 9, 44) sur la pièce de sollicitation (10).

2. Galet de roulement selon la revendication 1, **caractérisé en ce que** le ressort (8, 9, 44) peut être écarté, de préférence vers le haut, depuis une zone d'appui au niveau de la pièce de transmission (7).

3. Galet de roulement selon l'une des revendications 1 ou 2, **caractérisé en ce que** le ressort (8, 9, 44) peut être écarté depuis une zone d'appui au niveau de la pièce de sollicitation (10) au moyen de la pièce de transmission (7).

4. Galet de roulement selon l'une des revendications 1 à 3, **caractérisé en ce que** la pièce de sollicitation (10) forme un espace central inférieur, ouvert vers le bas, dans lequel le ressort (8, 9, 44) est reçu.

5. Galet de roulement selon l'une des revendications 2 à 4, **caractérisé en ce qu'**une zone d'appui supérieure est formée pour le ressort (8, 9, 44) au niveau de la pièce de transmission (7) et **en ce que** le ressort (8, 9, 44) peut être écarté vers le bas depuis la zone d'appui.

6. Galet de roulement selon l'une des revendications précédentes, **caractérisé en ce que** la pièce de transmission (7) est agencée à l'intérieur de la pièce de sollicitation (10).

7. Galet de roulement selon l'une des revendications précédentes, **caractérisé en ce que** la pièce de sollicitation (10) agit sur une pièce de prise au moyen d'une pièce intermédiaire élastique, **en ce que** la pièce de prise est montée de façon mobile en rotation dans la roue aux fins du déplacement entre une position de prise et une position de déblocage et **en ce que** la pièce intermédiaire déplace la pièce de prise dans la position de déblocage.

8. Galet de roulement selon l'une des revendications précédentes, **caractérisé en ce que** la pièce de sollicitation (10) peut être actionnée au moyen d'une poignée (11) accessible depuis l'extérieur afin de réaliser un déverrouillage d'urgence.

9. Galet de roulement selon la revendication 8, **caractérisé en ce que** la poignée (11) évolue avec la pièce de sollicitation (10) et/ou elle est reliée de façon fixe avec la pièce de sollicitation (10).

10. Galet de roulement selon l'une des revendications 8 ou 9, **caractérisé en ce que** la pièce de sollicitation (10) peut être déplacée par rapport à la pièce de transmission (7), qui reste stationnaire, au moyen de la poignée (11), de préférence en entraînant en même temps la zone d'appui ou la zone de support du ressort (8, 9, 44).

11. Galet de roulement selon l'une des revendications 8 à 10, **caractérisé en ce que** la poignée (11) peut être déplacée par rapport à une butée (12, 13) qui reste stationnaire.

12. Galet de roulement selon l'une des revendications précédentes, **caractérisé en ce qu'**un seul ressort (8, 9, 44) est prévu.

13. Galet de roulement selon l'une des revendications précédentes, **caractérisé en ce que** deux ressorts (8, 9) sont prévus, dont un qui est nécessaire pour déplacer la pièce de sollicitation (10) dans une position correspondant au blocage total et un ressort (8, 9, 44) qui est nécessaire pour déplacer la pièce de sollicitation (10) dans une position correspondant au blocage de la direction, étant entendu que de préférence, les ressorts (8, 9, 44) sont agencés l'un au-dessus de l'autre et/ou le ressort supérieur (8) est agencé à l'intérieur de la pièce de sollicitation (10) et/ou le ressort inférieur (9) est agencé à l'intérieur de la pièce de sollicitation (10).

14. Galet de roulement selon la revendication 13, **caractérisé en ce que** le ressort inférieur (9) avec son extrémité supérieure et le ressort supérieur (8) avec son extrémité inférieure prennent appui sur la pièce de sollicitation (10).

15. Galet de roulement selon l'une des revendications précédentes, **caractérisé en ce qu'**au moins un, et de préférence les deux ressorts (8, 9, 44) sont agencés à l'extérieur de la pièce de transmission (7).
